(19) Europäisches Patentamt / European Patent Office / Office européen des brevets

(11) **EP 4 576 492 A1**

(12) **EUROPEAN PATENT APPLICATION**

(43) Date of publication:
**25.06.2025 Bulletin 2025/26**

(21) Application number: **24219527.9**

(22) Date of filing: **12.12.2024**

(51) International Patent Classification (IPC):
*H02J 7/00* (2006.01)    *B25F 5/00* (2006.01)
*H01M 10/615* (2014.01)

(52) Cooperative Patent Classification (CPC):
**H02J 7/0069; H01M 10/615; H02J 7/00041;
H02J 7/0047; H02J 7/00714;** H01M 2220/30

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **20.12.2023 US 202318390096**

(71) Applicant: **Black & Decker, Inc.
New Britain, CT 06053 (US)**

(72) Inventors:
- **MUILWYK, Michael
  Towson, 21286 (US)**
- **RIGDON, William
  Towson, 21286 (US)**
- **BHANUPRASAD, Gorti V.
  Towson, 21286 (US)**

(74) Representative: **SBD IPAdmin
270 Bath Road
Slough, Berkshire SL1 4DX (GB)**

(54) **SYSTEMS AND METHODS FOR HEATING A POWER-TOOL BATTERY PACK TO ENABLE CHARGING**

(57)    Heating a battery pack for a power tool may be required to accelerate a charging time, especially in cold environments. Not all battery packs of a set of battery packs will heat at the same rate because of differences due to physical (e.g., mass) and electrical (e.g., AC resistance) differences. The disclosed approach includes determining an amplitude of an AC heating current based on characteristics of the battery pack attached to a charger so that all the battery packs in the set of battery packs may be heated at roughly the same rate regardless of their individual characteristics. The disclosure describes how this approach may be implemented in a variety of different charging scenarios.

**FIG. 15B**

EP 4 576 492 A1

**Description**

The present disclosure relates to a battery pack for a power tool and to systems and methods to enable efficient and effective charging of the battery pack.

BACKGROUND

A power tool may include a battery pack that can be charged to enable its operation. For example, a power tool (e.g., a drill) may include a battery pack that can be removed for charging and then replaced after charging to enable use of the power tool. The charging includes providing a direct current (DC) current to positive and negative terminals of the battery pack. A current level of the DC charging current may be adjusted based on feedback from the battery pack. The feedback can include a battery voltage, a battery temperature, or other parameter (e.g., cell voltage) of the battery, which is measured during the charging. The adjustment may be made for safety and/or to reduce a charge time required to complete the charging. The time required to complete the charging is based, in part, on a charging rate. A colder battery may require a slower charging rate than a warmer battery, and the discharge performance of a battery may also be reduced at lower temperatures. For example, a lithium ion (Li-ion) battery pack may be charged at a slower charging rate when the battery pack is at a temperature that is just above freezing (0 °C < T < 10 °C), and charging may not be recommended at all when the battery pack is at a temperature below freezing (e.g., T ≤ 0 °C).

SUMMARY

Accordingly, it may be desirable to heat a cold battery pack for a power tool to increase its maximum possible charging rate. The heating may be carried out using an alternating current (AC) coupled to the positive and negative terminals of the battery pack.

In some aspects, the techniques described herein relate to a method for heating a battery pack of a power tool, the method including: coupling the battery pack to a heating device; receiving, at the heating device, a battery-pack identification from the battery pack; measuring an AC internal resistance of the battery pack using the heating device; determining details of the battery pack based on the battery-pack identification or the AC internal resistance; computing, at the heating device, an AC heating current based on the details of the battery pack and the AC internal resistance; and transmitting the AC heating current from the heating device to terminals of the battery pack of the power tool to heat the battery pack.

In some aspects, the techniques described herein relate to a method, wherein determining the details includes querying a database based on the battery-pack identification.

In some aspects, the techniques described herein relate to a method, wherein the details include any of a mass, a target AC internal resistance, and a target heating rate.

In some aspects, the techniques described herein relate to a method, wherein the mass corresponds to a range of possible masses for the battery pack based on the battery-pack identification.

In some aspects, the techniques described herein relate to a method, further including: monitoring a temperature of the battery pack while the AC heating current is transmitted to the battery pack; and comparing a rate of change of the temperature to the target heating rate.

In some aspects, the techniques described herein relate to a method, further including: ceasing to transmit the AC heating current from the heating device to the battery pack when the rate of the change of the temperature and the target heating rate are different by a threshold amount.

In some aspects, the techniques described herein relate to a method, wherein determining the details includes estimating a mass of the battery pack based on the AC internal resistance.

In some aspects, the techniques described herein relate to a method, wherein: the details of the battery pack include a mass (m) of the battery pack and a target heating rate (r); computing the AC heating current ($I_{RMS}$) based on the

$$I_{RMS} = K \sqrt{\frac{r \cdot m}{R_{AC}}}$$

details of the battery pack and the AC internal resistance includes solving an equation: , wherein K is a constant.

In some aspects, the techniques described herein relate to a method, wherein receiving the battery-pack identification from the battery pack includes: measuring a resistance of a discrete resistor included in the battery pack for identifying the battery pack.

In some aspects, the techniques described herein relate to a method, wherein receiving the battery-pack identification from the battery pack includes: recalling a value from a memory included in the battery pack for identifying the battery pack.

In some aspects, the techniques described herein relate to a method, wherein receiving the battery-pack identification from the battery pack includes: receiving a message from a microcontroller included in the battery pack for identifying the battery pack.

In some aspects, the techniques described herein relate to a method, wherein measuring the AC internal resistance includes: applying an AC excitation current to the terminals of the battery pack; sensing a voltage across the terminals of the battery pack in response to the AC excitation current; and determining the AC internal resistance as a ratio of the AC excitation current to the voltage.

In some aspects, the techniques described herein relate to a method, wherein: the AC excitation current is at a frequency that is greater than or equal to 50 kilohertz.

In some aspects, the techniques described herein relate to a system for heating a battery pack of a power tool including: a heater coupled to a positive terminal and a negative terminal of the battery pack, the heater including an AC inverter configured to generate an AC heating current to heat the battery pack; an AC resistance (i.e., ACR) measurement circuit coupled to the positive terminal and the negative terminal and configured to measure an AC resistance of the battery pack; and a control circuit configured to: receive a battery-pack identification from an ID terminal of the battery pack; receive the AC resistance of the battery pack from the ACR measurement circuit; determine the AC heating current based on the battery-pack identification and the AC resistance; control the AC inverter of the heater to supply the AC heating current to the positive terminal and the negative terminal of the battery pack; and determine when the battery pack is heated for charging based on a temperature measurement from a thermistor terminal of the battery pack.

In some aspects, the techniques described herein relate to a system, wherein: the battery-pack identification is a resistance of an ID resistor coupled to the ID terminal of the battery pack, the resistance corresponding to a mass of the battery pack; and the AC heating current is based on the mass of the battery pack and the AC resistance of the battery pack.

In some aspects, the techniques described herein relate to a system, wherein the ACR measurement circuit is configured to: supply an AC excitation current to the positive terminal and the negative terminal of the battery pack; measure a voltage between the positive terminal and the negative terminal of the battery pack; and determine the AC resistance of the battery pack based on a ratio of the voltage to the AC excitation current.

In some aspects, the techniques described herein relate to a system, wherein the AC excitation current has a frequency swept over a range of frequencies to determine a plurality of AC resistances over the range of frequencies.

In some aspects, the techniques described herein relate to a system, wherein: the AC inverter includes at least one transistor; and the control circuit is further configured to generate a modulation signal based on the AC heating current to switch the at least one transistor.

In some aspects, the techniques described herein relate to a system, wherein the modulation signal has a frequency above 50 kHz.

In some aspects, the techniques described herein relate to a system, wherein the at least one transistor is fabricated using GaN.

In some aspects, the techniques described herein relate to a system, wherein the heater, the ACR measurement circuit, and the control circuit are implemented as a heating attachment configured to attach to the battery pack for heating while the battery pack is not on a charger.

In some aspects, the techniques described herein relate to a system, wherein the heater, the ACR measurement circuit, and the control circuit are implemented as a heater adapter configured to attach between the battery pack and a charger.

In some aspects, the techniques described herein relate to a system, wherein the control circuit of the heater adapter is further configured: enable the heater to transmit the AC heating current to the battery pack for heating and disable a charger from transmitting a DC current to the battery pack for charging when the temperature measurement is below a threshold; and disable the heater from transmitting the AC heating current to the battery pack for heating and enable the charger to transmit the DC current to the battery pack for charging when the temperature measurement is above a threshold..

In some aspects, the techniques described herein relate to a system, further including: a memory including a database that relates mass values to a plurality of battery-pack identifications; and wherein the control circuit is further configured to: query the database based on the battery-pack identification to determine a mass of the battery pack.

In some aspects, the techniques described herein relate to a device for heating and charging a battery pack of a power tool including: a heater coupled to a positive terminal and a negative terminal of the battery pack, the heater configured to generate an AC heating current; an ACR measurement circuit coupled to the positive terminal and the negative terminal and configured to measure an AC resistance of the battery pack; a charger coupled to the positive terminal and the negative terminal of the battery pack, the charger configured to supply a DC charging current; and a control circuit configured to: receive a battery-pack identification from an ID terminal of the battery pack; receive the AC resistance of the battery pack from the ACR measurement circuit; receive a temperature of the battery pack from a temperature sensor in the battery pack; determine the AC heating current based on the battery-pack identification and the AC resistance; control the heater to supply the AC heating current to the positive terminal and the negative terminal of the battery pack, to heat the battery pack while the temperature of the battery pack is below a threshold temperature; and

control the charger to supply the DC charging current to the positive terminal and the negative terminal of the battery pack, to charge the battery pack while the temperature of the battery pack is above the threshold temperature.

In some aspects, the techniques described herein relate to a device, further including: a fan configured by the control circuit to move air across the charger to the battery pack while the battery pack is being charged to help heat the battery pack.

The foregoing illustrative summary, as well as other exemplary objectives and/or advantages of the disclosure, and the manner in which the same are accomplished, are further explained within the following detailed description and its accompanying drawings.

BRIEF DESCRIPTION OF THE DRAWINGS

FIG. 1 illustrates a battery pack for a power tool according to a possible implementation of the present disclosure.

FIG. 2 is a flowchart of a method for computing an AC heating current ($I_{RMS}$) for a battery pack of a power tool according to a possible implementation of the present disclosure.

FIG. 3A is a flowchart illustrating the step of measuring an AC internal resistance ($R_{AC}$) of a battery pack using a heating device according to a possible implementation of the present disclosure.

FIG. 3B is a graph illustrating the step of selecting a frequency for AC excitation for two different battery packs according to a possible implementation of the present disclosure.

FIG. 4A is a flowchart illustrating the step of determining details of a battery pack according to a first possible implementation of the present disclosure.

FIG. 4B is a flowchart illustrating the step of determining details of a battery pack according to a second possible implementation of the present disclosure.

FIG. 5 is a graph illustrating a possible relationship between battery pack mass and AC internal resistance according to a possible implementation of the present disclosure.

FIG. 6 illustrates a database including details of battery packs according to a possible implementation of the present disclosure.

FIG. 7 is a graph illustrating ranges of masses corresponding to different battery packs according to a possible implementation of the present disclosure.

FIG. 8 illustrates a system for heating a battery pack of a power tool according to a possible implementation of the present disclosure.

FIG. 9 is a graph showing the temperature of a battery pack heated for charging according to an implementation of the present invention.

FIGs. 10A-10C illustrate various isometric views of an example device for heating a battery pack of a power tool to enable charging according to a first possible implementation of the present disclosure.

FIG. 11 illustrates an isometric view of the example device of FIGs. 10A-10C coupled to an example battery pack.

FIG. 12 illustrates a block diagram of a device for heating a battery pack of a power tool to enable charging according to the first possible implementation of the present disclosure.

FIG. 13 schematically depicts a heating attachment for a battery pack of a power tool according to a possible implementation of the present disclosure.

FIG. 14 is a flowchart of a method for charging a battery pack heated by a heating attachment for a battery pack of a power tool according to a possible implementation of the present disclosure.

FIG. 15A is an exploded isometric view of a device for heating a battery pack of a power tool to enable charging according to a second possible implementation of the present disclosure.

FIG. 15B is an isometric view of the device for heating a battery pack connected between a battery pack and a battery charger according to the second possible implementation of the present disclosure.

FIG. 16 illustrates a block diagram of a device for heating a battery pack of a power tool to enable charging according to a second possible implementation of the present disclosure.

FIG. 17 schematically depicts a heating adapter for a battery pack of a power tool according to a possible implementation of the present disclosure.

FIG. 18 is a flowchart of a method for charging a battery pack heated by the heating adapter according to a possible implementation of the present disclosure.

FIG. 19 illustrates an isometric view of a device for heating a battery pack of a power tool for charging according to a third possible implementation of the present disclosure.

FIG. 20 illustrates an isometric view of an example battery pack that may be charged by the device of FIG. 19.

FIG. 21 illustrates an isometric view of the battery pack of FIG. 20 coupled to the device of FIG. 19 according the third possible implementation of the present disclosure.

FIG. 22 illustrates a block diagram of the device of FIG. 19 according to the third possible implementation of the present disclosure.

FIG. 23 is a flowchart of a method for charging a battery pack heated by the device of FIG. 19.

The components in the drawings are not necessarily to scale relative to each other. Like reference numerals designate corresponding parts throughout the several views.

DETAILED DESCRIPTION

A power tool may operate based on power provided by a battery pack (i.e., battery). The battery pack may include a plurality of battery cells (e.g., lithium-ion cells) that are electrically connected to provide an operating voltage and current within an operating range of the power tool. When the voltage and/or the current of the battery pack is reduced below this operating range, charging is required. Quickly charging a battery pack for a power tool may be desirable because it can enable a more efficient use of the power tool. Charging a cold (e.g., < 10° C) battery pack, however, may be undesirably slow or impossible. As a result, heating the battery pack before charging may be required. While a battery pack may be heated externally using inductive heating, convection heating, or radiative heating, these approaches can create a large temperature gradient within the battery pack, which can affect the charging of the battery pack. Furthermore, the external heating required for optimal (e.g., fastest) charging may vary based on characteristics of the battery pack. Without knowledge of these characteristics, the heating may not be optimal (e.g., slower than necessary). For example, too little heating may result in a longer heating time before the battery pack is ready to charge and too much heating may result in hot spots or damage to the battery pack. The disclosed technique may have the technical effect of decreasing the time required for charging, especially in a cold environment.

The present disclosure describes systems and methods to address these technical problems using an AC heating approach, which can heat a battery pack from within (i.e., internally) without affecting the performance of the battery pack (e.g., without charging or discharging the battery pack). The disclosed approach can control the AC heating to a desired rate of heating based on characteristics of the battery pack. In a possible implementation, this control can enable different battery packs to be heated at the same rate automatically. In another possible implementation, this avoids heating a damaged, faulted and/or aged battery at a compromising rate outside of the expected range of heating rates.

The AC heating can be applied as part of a charging process that can be configured to switch back and forth between AC heating and charging based on the temperature of the battery pack in order to set and maintain the temperature of the battery pack within an ideal temperature range for charging. The disclosed approach can be applied in various charging scenarios. Accordingly, the disclosure further describes different implementations for applying the AC heating to a battery pack of a power tool.

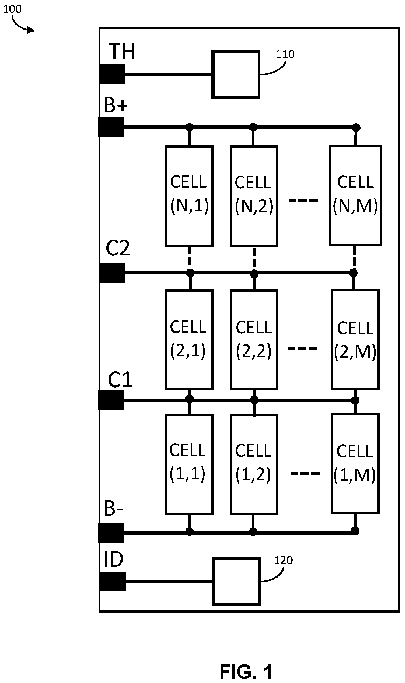

FIG. 1 illustrates a battery pack for a power tool according to a possible implementation of the present disclosure.

The battery pack 100 may include a plurality of cells. The cells are connected in series to provide a battery pack voltage (i.e., battery voltage) between a positive terminal (B+) and a negative terminal (B-). The series cells can be further coupled in parallel to source/sink a current at the positive/negative terminals of the battery pack 100. The number of cells in series (i.e., N) may correspond to the maximum voltage possible between the positive terminal (B+) and the negative terminal (B-) of the battery pack 100, while the number of cells in parallel (i.e., M) may correspond to the maximum capacity available at the terminals (B+, B-) of the battery pack 100.

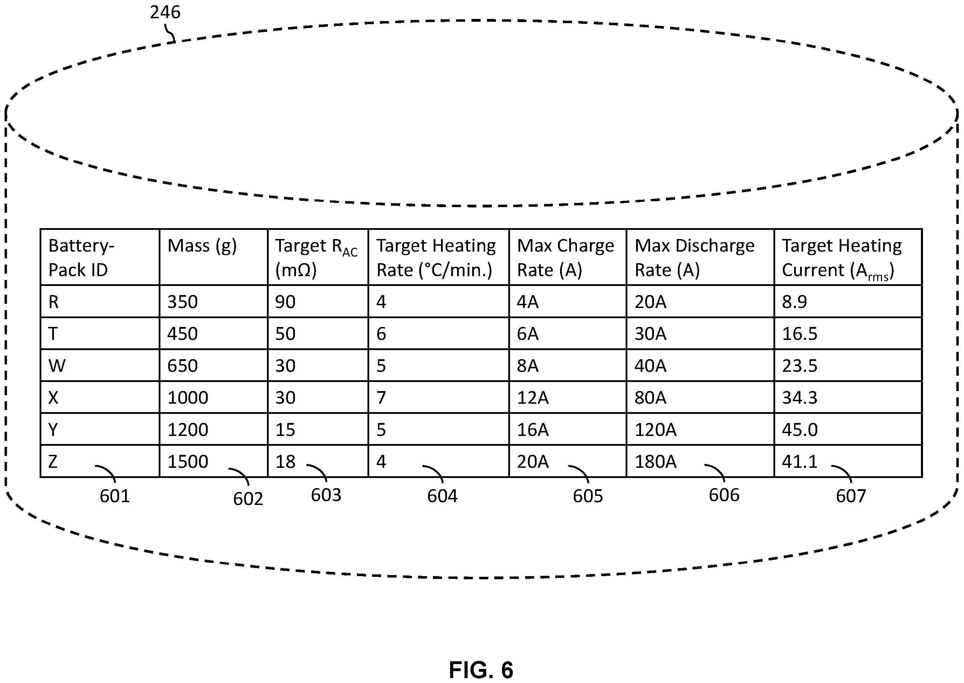

The mass (m) of the battery pack can be measured in grams (or kilograms) and corresponds to the amount of matter or thermal mass in the battery pack. The mass of a battery pack may be measured using a balance or scale. Alternatively, the mass of a battery pack may be approximated based on the mass of a type of battery cell (e.g., 18650 Li-ion cell) used in the battery pack multiplied by the number of battery cells in the battery pack. Accordingly, identifying information about the battery pack including the battery cell type and battery cell number may be used to estimate its mass (e.g., see FIG. 6).

The battery pack 100 may further include a temperature sensor 110 to monitor the temperature of the battery pack. In a possible implementation, the temperature sensor 110 is a thermistor configured to generate a resistance at a thermistor terminal (TH) of the battery pack 100. In a possible implementation, multiple temperature sensors may be included in the battery pack and for these implementations, the battery pack 100 may include multiple temperature (e.g., thermistor) terminals or an interface (e.g., multiplexer) between the multiple temperature sensors and the thermistor terminal (TH).

The battery pack 100 may further include a circuit or device configured to describe and/or identify the battery pack (i.e., an identifier 120). For example, the identifier 120 can generate a value, signal, or message at an identification terminal (ID) of the battery pack 100 to identify one or more characteristics of the battery pack 100. The one or more characteristics may include (but is not limited to) a battery cell vendor, a battery pack and/or battery cell model, a number of battery cells, a type of battery cells (i.e., 18650 or 21700), battery cell capacity, and/or a battery cell configuration.

In a possible implementation, the identifier 120 is a discrete resistor having a resistance corresponding to the one or more characteristics. In another possible implementation, the identifier 120 is a memory having a stored value corresponding to the one or more characteristics. In another possible implementation, the identifier 120 is a microcontroller configured to generate a signal (e.g., message) corresponding to the one or more characteristics. In a possible embodiment, the microcontroller can be further coupled to the temperature sensor 110 and further configured to generate a signal (e.g., message) that includes both the one or more characteristics of the battery pack 100 and the temperature measured by the temperature sensor 110.

Heating the battery pack 100 includes applying an AC current to the terminals (B+/B-) of the battery pack 100. The AC current delivers no net charge to the cells on average because of its polarity change, but the AC current can be dissipated in an AC internal resistance (i.e., AC resistance ($R_{AC}$)) of the battery cell to generate heat. For an AC current at frequencies above 1 kilo-Hertz (kHz) the power dissipated by the battery pack is given by the equation below, where $I_{RMS}$ is the root mean squared of the AC current.

$$P = I_{RMS}^2 R_{AC} \tag{1}$$

The AC resistance (i.e., $R_{AC}$) can depend on the characteristics of the battery pack 100. For example, the AC resistance of the battery pack can correspond to the number of battery cells within a battery pack . Additionally, the AC resistance of the battery pack can correspond to how those battery cells are electrically connected within the battery pack (i.e., the circuit topology of the battery pack). Within a power tool environment, battery packs may have a variety of different values for AC resistance because of differences in the number of cells, connections, and/or the manner in which the cells are connected. Further, even battery packs that are nominally the same (i.e., from the same design) may have variations in their AC resistances due to aging and/or fabrication tolerances Accordingly, the AC resistance for a battery pack may be measured as part of an AC heating process because the rate of heating may be based, in part, on the measurement of the AC resistance.

Determining the AC resistance may include applying an AC current signal to the terminals (B+/B-) of the battery pack 100 while monitoring the voltage across the terminals (i.e., $R_{AC} = V/I$). The AC current applied may have a frequency (f) that is selected based on a few criteria. First, the frequency may be selected to be high enough (e.g., f >> 1kHz) so that the impedance of the battery pack 100 is not associated with electrochemical charge transfer and storage reactions in the electrode chemistry of the battery pack. In other words, at these frequencies the impedance of the battery pack is predominantly electronic and ionic, but not the long-range transport of ions or charged species. High frequency excitation excites charge in shorter time and space domains which avoids the degrading effects of battery electrochemical reduction and oxidation reactions and prevents concern of such reactions as lithium plating associated with lower frequencies. Second, the frequency may be selected to be equal to the frequency used for AC heating, which may be made high (e.g., f >20 kHz) to reduce the time required for heating, as will be discussed later.

The power dissipated from the applied AC current can raise the temperature of the battery pack 100. The rate that the temperature of the battery pack rises (i.e., heating rate (r)) can be expressed (neglecting heat loss to the environment) in the equation below.

$$r = \frac{I_{rms}^2 \cdot R_{AC}}{m \cdot c} \tag{2}$$

Where r can measured by the control circuit as

$$r = \frac{dT}{dt} \ in \ units \ of \ \frac{°C}{min}$$

In the equation above, r is the change in temperature over time (r = dT/dt), $I_{ms}$ is the root-mean-squared (RMS) value of the applied AC current, $R_{AC}$ is the AC resistance, m is the mass of the battery, and c is the specific heat of the battery. The specific heat (c), which is the amount of energy (joules (J)) that must be applied to each unit of mass (gram (g)) of the battery pack to raise the temperature by one degree (°C), may be similar for all power tool battery packs within a system and so may be assumed to be a constant in the equation above.

The mass (m) of the battery pack, as described previously, may be an identifying characteristic of the battery pack. Accordingly, the mass (m) of the battery pack may be expressed as the signal, value, or message generated by the identifier 120 at the ID terminal of the battery. The mass (m) may correspond to (e.g., may be selected from) a range of possible masses for a type of battery corresponding to a battery-pack ID.

The AC heating process may include computing the AC current ($I_{RMS}$) required for a particular heating rate (r). For example, the AC heating current ($I_{RMS}$) may be computed for a desired heating rate (r). The desired heating rate may be determined based on specified time to heat the battery to a temperature suitable (e.g., optimal) for charging. For example, if a heating period is specified as 5 minutes to reach 10 °C and the measured temperature of the battery pack is -10 °C, then the battery must be heated at a rate (r) of 4 degrees per minute. This rate, plus the characteristics of the battery, may be used to determine the AC heating current ($I_{RMS}$) necessary to achieve the specified heating period (5 minutes to reach 10°C). In particular, the desired (i.e., computed) heating rate (r) along with a battery mass (m) and an AC resistance ($R_{AC}$) may be used to determine the required AC heating current ($I_{RMS}$) based on the equation shown below, where K is a constant.

$$I_{RMS} = K \sqrt{\frac{r \cdot m}{R_{AC}}} \tag{3}$$

Alternatively, the AC heating process may include computing a heating rate (r) resulting from an AC current ($I_{RMS}$) available from a current source. For example, the (e.g., maximum) AC heating current ($I_{RMS}$) along with a battery mass (m), and an AC resistance ($R_{AC}$) may be used to determine a target (i.e., expected) heating rate (r) based on the equation shown below, where K is a constant.

$$r = \frac{I_{RMS}^2 \cdot R_{AC}}{m \cdot K} \tag{4}$$

The target heating rate (r) may then be used to estimate an overall time to heat the battery pack prior to charging. The time may be used to provide a user with information about the heating (e.g., time to finish). Additionally, the temperature of the battery pack may be monitored to determine an actual heating rate. The actual heating rate may be compared to the target heating rate to detect a malfunction. For example, the AC heating may be terminated when the actual heating rate and the target heating rate differ by a threshold amount.

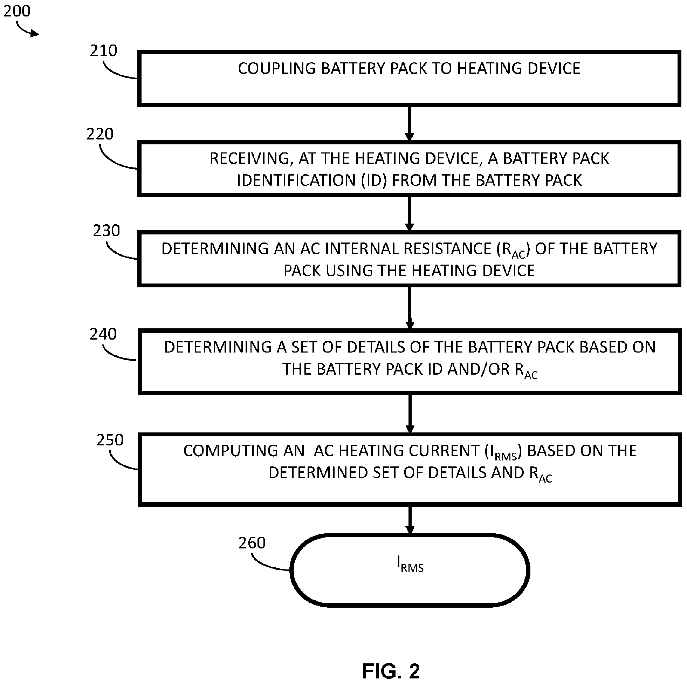

FIG. 2 is a flowchart of a method for determining an AC heating current ($I_{RMS}$) for a battery pack (i.e., battery) of a power tool according to a possible implementation of the present disclosure. The method 200 begins with the step 210 of coupling (i.e., mechanically and electrically) a battery pack to a heating device. The heating device may be implemented variously. In one possible implementation, the heating device can be implemented as a stand-alone (i.e., discrete) heating attachment that can be coupled to the battery pack to heat the battery pack prior to it being coupled to a charger. In another possible implementation, the heating device can be implemented as a heating adapter that can be coupled between a battery pack and a charger to add heating functionality to the charger. In another possible implementation, the heating device can be implemented as part of a charger to add heating capabilities to the charger's function (i.e., built-in heating).

After the battery pack is coupled to the heating device, the method 200 includes a step 220 of receiving a battery pack identification (i.e., a battery pack ID) from the battery pack. The step 220 of receiving the battery pack ID may include measuring a value (e.g., resistance, voltage, etc.) at an ID terminal of the battery pack. For example, the battery pack may include a discrete resistor with a resistance corresponding to the battery pack ID. Alternatively or additionally, the step 220 may include the heating device communicating with the battery pack to query/receive the battery pack ID. For example, the battery pack may include a memory or a microcontroller configured to transmit the battery pack ID to the ID terminal (ID) of the battery pack. As mentioned, the battery pack ID may include a value, signal, and/or message (e.g., digital packet) that can be interpreted to understand a physical characteristic (e.g., mass) of the battery pack.

The method 200 further includes a step 230 of determining an AC internal resistance ($R_{AC}$) of the battery pack using the heating device and a step 240 of determining a set of details of the battery pack based on the battery pack ID or the $R_{AC}$. The method 200 further includes a step 250 of computing the AC heating current ($I_{RMS}$) based on the set of details of the battery pack and the measured $R_{AC}$. The heating device may then be configured to transmit the computed AC heating current to the terminals of the battery pack of the power tool to heat the battery pack (e.g., prior to charging).

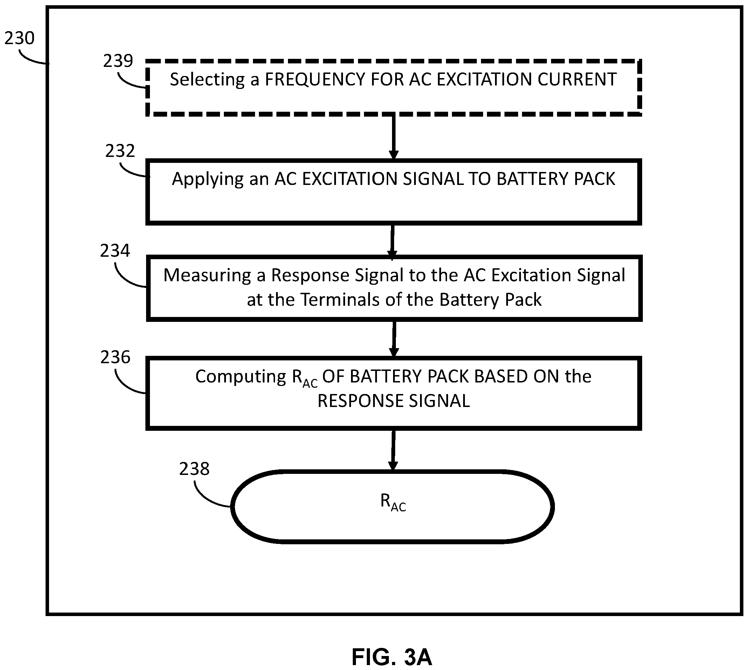

FIG. 3A is a flowchart illustrating the step 230 of determining the $R_{AC}$ of a battery pack using a heating device according to a possible implementation of the present disclosure. The step 230 of determining the AC internal resistance ($R_{AC}$) of the battery pack may include the step 232 of applying an AC excitation signal (e.g., current) to the terminals (B+, B-) of the battery pack, the step 234 of measuring the response signal (e.g., voltage) to the AC excitation signal across the terminals of the battery pack and the step 236 of computing the $R_{AC}$ of the battery pack based on the measured response signal.

When the frequency of the AC excitation current is high (> 1kHz) then the ratio of (e.g., the in-phase portion of) the voltage to the current may correspond to the AC resistance. The output 238 of the step 230 is the $R_{AC}$ of the battery pack. The value of the $R_{AC}$ may be unique to the battery pack coupled to the heat device. Accordingly, the heating described here may be referred to as smart heating.

In a possible implementation, the step 230 of determining the $R_{AC}$ of the battery pack may further include the step 239 of selecting a frequency for the AC excitation current based on multiple measurements of AC internal resistances at different excitation current frequencies. For example, a sweep of the AC resistance may be made over a range of frequencies to determine a peak AC resistance.

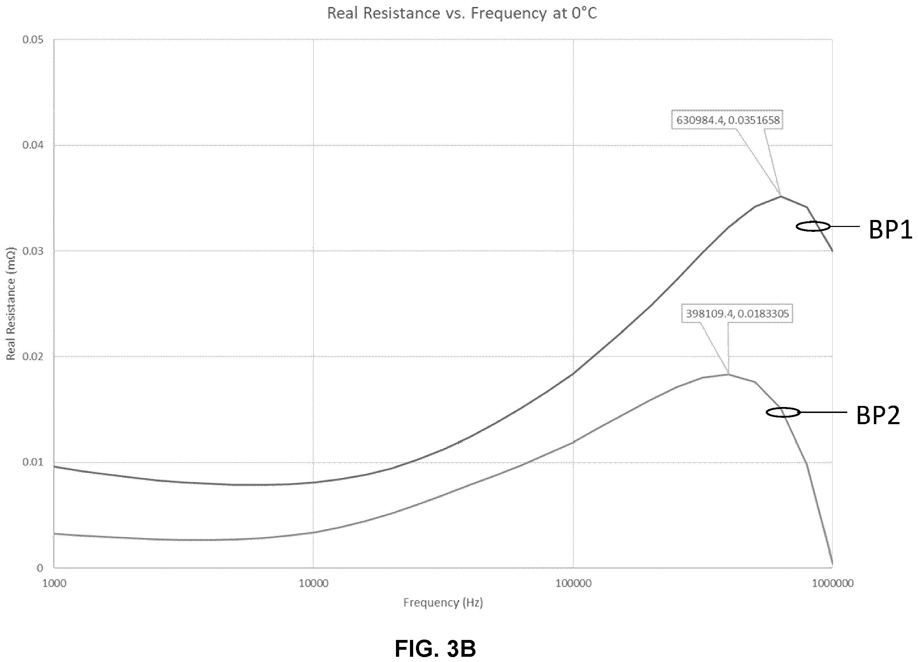

FIG. 3B is a graph illustrating the step 239 of selecting a frequency for AC excitation for two different battery packs according to a possible implementation of the present disclosure. The graph shows that the $R_{AC}$ increases as the frequency of the AC current ($I_{RMS}$) increases. In other words, for AC currents having the same amplitude but different frequencies, the AC currents at higher frequencies may be associated with a faster rise of the temperature of the battery pack during heating. As the frequency is increased, there may be an optimal frequency where the $R_{AC}$ is at a maximum. This frequency may be associated with a maximum heating rate, as described above. As shown, the graph illustrates the AC resistance (i.e., real resistance) of a first battery pack (BP1) and a second battery pack (BP2) for frequencies between 1 kHz and 1 MHz. Each battery pack has a different frequency at which the maximum heating rate is achieved. Accordingly, it may be useful in some implementations, to determine a frequency to achieve the maximum heating rate.

Returning to FIG. 2, the step 240 of determining a set of details of the battery pack may be implemented in various ways and the set of details of the battery pack may include various parameters and/or a variety of ranges related to a battery type, which can be determined by the battery pack ID.

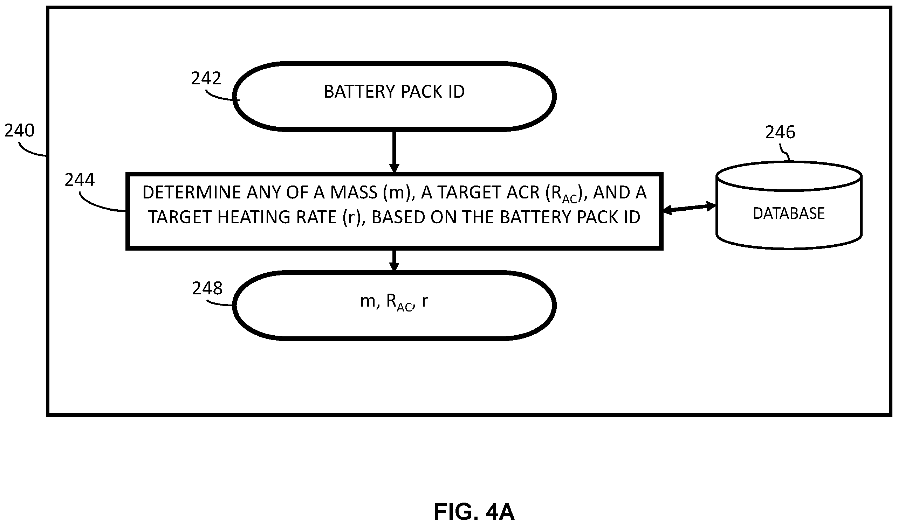

FIG. 4A is a flowchart illustrating the step 240 of determining a set of details of a battery pack according to a first possible implementation of the present disclosure. In this implementation, the step 240 may include the step 242 of receiving the battery pack ID, the step 244 of determining one of a mass (m), a target ACR, and a target heating rate based on the battery pack ID retrieved/received in step 242. For example, in the step 244, a query based on the battery pack ID may be made of a database 246. The database 246 may include a look-up table (LUT) in which the details of various battery packs are stored. In response to the query, the database returns a set of details of the battery pack. For example, based on the battery pack ID, the database 246 can return any combination including a mass (m) of the battery pack; a target AC internal resistance (i.e., $R_{AC}$) of the battery pack, and a target (e.g., maximum) heating rate (r) of the battery pack. The output 248 of the step 240 is the determined set of details - mass, target AC internal resistance and/or target heating rate - of the battery pack.

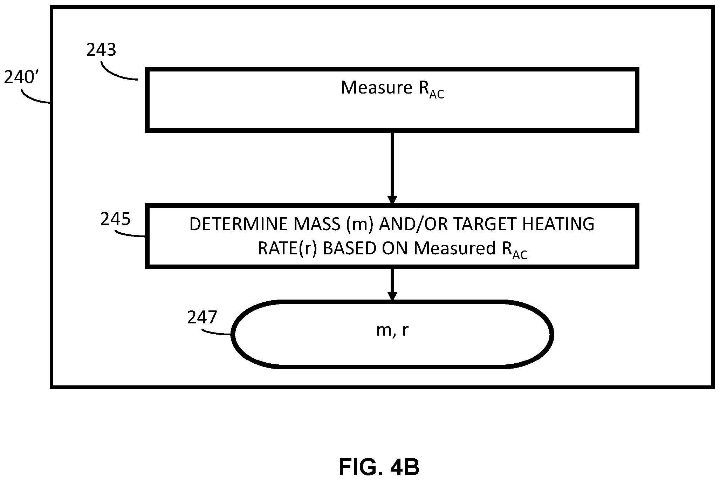

FIG. 4B is a flowchart illustrating the step 240' of determining a set of details of a battery pack according to a second possible implementation of the present disclosure. In this implementation, the battery pack ID is not required to determine the set of details of the battery pack. Instead, the set of details of the battery pack may be based on the measurement of the AC internal resistance ($R_{AC}$) made by the heating device. As such, the step 240' may include a step 243 of measuring the AC internal resistance, a step 245 of determining one of mass (m) and/or a target heating rate (r) of the battery pack based on the AC internal resistance. The output 247 of the step 240' is the determined mass and/or target heating rate of the battery pack. In a possible implementation the determination may be an estimate made from empirical measurements.

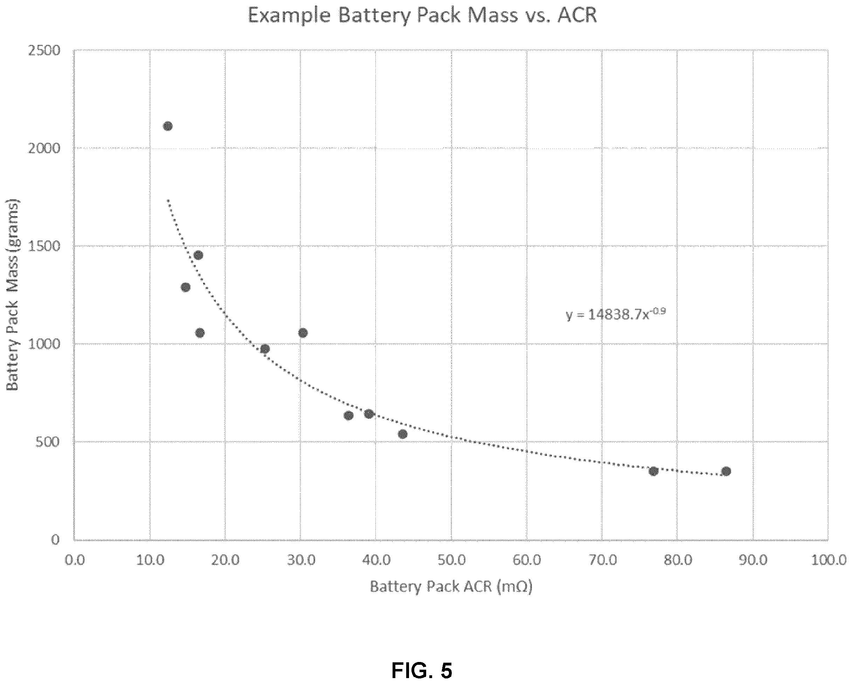

FIG. 5 is a graph illustrating a possible relationship between a battery pack's mass and the battery pack's AC internal resistance (i.e., ACR) according to a possible implementation of the present disclosure. As shown, the mass of a battery pack (as measured in grams) may be determined based on a curve fit relating the $R_{AC}$ to the battery pack mass for a collection of battery packs (e.g., $m = 14838 \cdot R_{AC}^{0.9}$). The curve fit may be generated prior to use (e.g., factory set) and stored in a memory of the heating device.

FIG. 6 illustrates the database 246 including details of a set of battery packs according to a possible implementation of the present disclosure. The database 246 may be generated prior to use (e.g., factory set) and stored in a memory of the heating device, and as shown, the database 246 relates a variety of battery pack details to a group of battery pack IDs 601 that can be used with the heating device. The database 246 may relate mass (m) to battery pack ID. As shown, the masses 602 for the group of battery pack IDs 601 may range from 350 grams to 1500 grams.

The database 246 may further relate target $R_{AC}$ to battery pack ID. As shown, the target AC internal resistances 603 for the group of battery pack IDs 601 may range from 90 milli-ohms to 18 milli-ohms. In a possible implementation, the measured AC internal resistance may be compared to the target internal resistance to determine if the battery pack is malfunctioning.

The database 246 may further relate target (e.g., maximum) heating rate (r) to battery pack ID. As shown, the target heating rates 604 for the group of battery pack IDs 601 may range from 4 to 7 degrees Celsius per minute (°C/min). A heating rate outside a range of tolerance around the target heating rate could indicate a fault in the battery pack, such as a malfunctioning temperature sensor or an open connection in the battery pack. In a possible implementation, the heating device can be configured to take an action (e.g., shut down, indicate fault, etc.) in response to the fault.

In some implementations, the database 246 may optionally include information related to charging, such as a maximum charging rates 605 and maximum discharging rates 606. In these implementations, the database may be queried for a heating process and for a charging process.

In some implementations, the database 246 may include heating currents ($I_{RMS}$) computed from the masses 602, the target AC internal resistances 603, and the maximum heating rates 604. During heating, these target heating currents 607 can be compared to the actual heating current to provide a measure of safety by providing a reference in order to determine if the actual heating current is significantly higher than the target heating current (e.g., above a threshold) or significantly lower than the target heating current (e.g., below a threshold).

The AC heating current used for heating may be computed based on a target heating rate (r) that is in a range (e.g., $r_{MIN} < r < r_{MAX}$) or that is approximately equal to a target rate (i.e., $r \approx r_{target}$). The computed AC heating current may then be used to heat the battery pack to a desired temperature. For example, the heating process may be stopped when the battery pack is at a temperature suitable for charging. In a possible implementation, the heating may also be stopped for safety. For example, if the rate is greater than or less than the target range (e.g. $r > r_{MAX}$ or $r < r_{min}$), then AC current may be adjusted, limited, or halted.

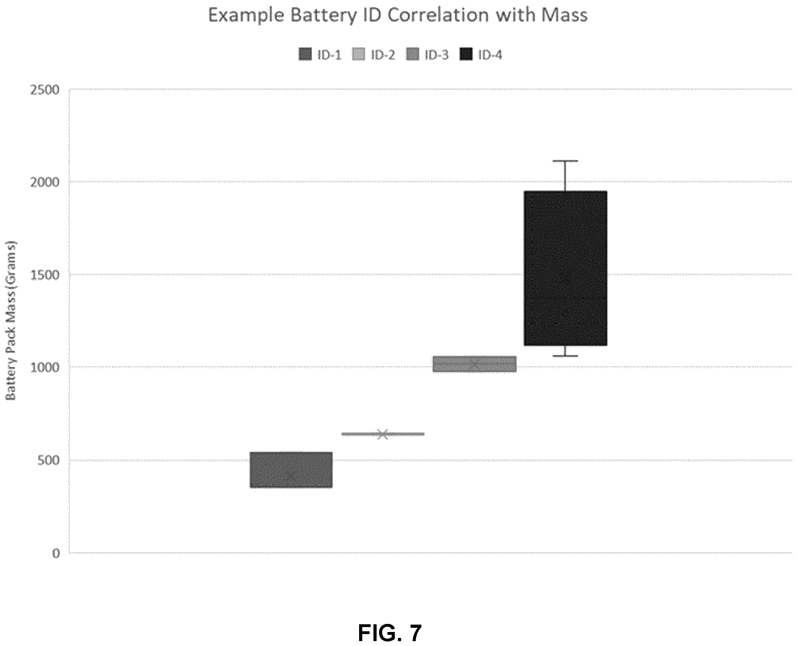

FIG. 7 is a graph illustrating ranges of masses corresponding to different battery packs according to a possible implementation of the present disclosure. The mass of the battery pack stored in the database 405 and used to compute the heating current may be based on a range of possible masses for the battery pack. For example, a battery pack may have a range of possible masses and the mass is within the range. In a possible implementation, the mass is an average mass of the range. As shown, four different battery packs (ID-1, ID-2, ID-3, ID-4) have four different ranges and therefore four different masses.

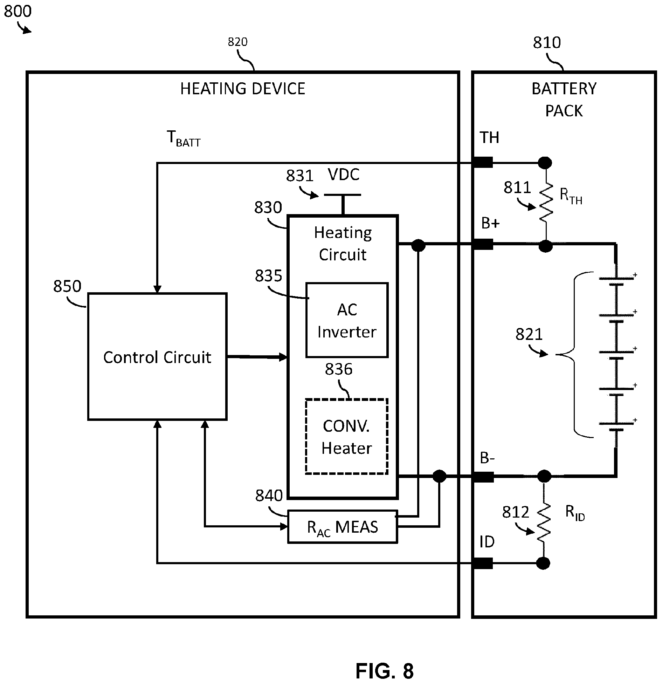

FIG. 8 illustrates a system 800 for heating a battery pack of a power tool according to a possible implementation of the present disclosure. The system 800 may include a battery pack 810 coupled to a heating device 820. The battery pack 810 may include a plurality of cells 821 configured to provide rechargeable power to a power tool (e.g., hand tool, garden tool, etc.). The battery pack 810 may further include a thermistor 811 configured with a variable resistance that changes according to a temperature of the battery pack (or, alternatively, of the battery cells). The thermistor 811 may be coupled to a control circuit 850 of the heating device 820 via a thermistor terminal (TH) of the battery pack 810. The battery pack 810 may further include an identification (ID) resistor 812. The resistance ($R_{ID}$) of the ID resistor 812 may be set (e.g., factory set) according to a characteristic of the battery pack 810. The ID resistor 812 may be coupled to the control circuit 850 via an identification terminal (ID) of the battery pack 810.

The heating device 820 may include a control circuit (e.g., microcontroller). The control circuit 850 may be configured to sense the resistance ($R_{TH}$) of the thermistor and to determine the temperature of the battery pack based on the resistance. The temperature ($T_{BATT}$) may be used as feedback to control the heating of the battery pack. For example, the control circuit 850 may monitor the temperature over time to determine the rate of heating. The control circuit 850 may be further configured to sense the resistance ($R_{ID}$) of the ID resistor. In a possible implementation, the control circuit 850 is further configured to determine the mass of the battery based on the ID resistance ($R_{ID}$).

The AC resistance of the battery pack 810 may be determined based on the battery pack ID. Alternatively, the heating device 820 can include an AC resistance (i.e., $R_{AC}$) measurement circuit (i.e., $R_{AC}$ measurement circuit) 840 to determine the AC resistance of the battery pack. The $R_{AC}$ measurement circuit 840 is configured to generate an AC excitation current at an amplitude ($I_{MEAS}$) and at a frequency (f) and transmit the AC excitation current to the positive terminal (B+) and negative terminal (B-) of the battery pack 810. The $R_{AC}$ measurement circuit 840 is further configured to sense a voltage between the positive terminal (B+) and negative terminal (B-) of the battery pack 810. The $R_{AC}$ measurement circuit 840 (or the control circuit 850) is configured to compute the AC resistance ($R_{AC}$) of the battery pack 810. The AC resistance ($R_{AC}$) can be computed as the ratio of the measured voltage ($V_{MEAS}$) to the applied AC excitation current (i.e., $R_{AC} = V_{MEAS}/I_{MEAS}$). In a possible implementation, the $R_{AC}$ measurement circuit 840 may be further configured to adjust (i.e., sweep) a range of frequencies and select a plurality of frequencies (f) for the AC current in order to measure a plurality of AC resistances over the range of frequencies. In this case, the $R_{AC}$ measurement circuit 840 (or the control circuit 850) may be further configured to select the frequency for AC heating as the frequency that provides the maximum effect of the plurality of selected AC resistances. An optimal AC heating frequency may also be pre-determined for maximum AC resistance of a particular battery pack ID. The AC resistance may also be inferred from the battery pack ID. By maximizing the $R_{AC}$, the resulting heating rate for a given heating current may be maximized (see Equation 4).

The heating device 820 may further include a heating circuit 830 . The heating circuit 830 may be configured by the control circuit 850 to apply the AC heating current ($I_{RMS}$) to the terminals (B+/B-) of the battery pack 810. As mentioned, the AC heating current may be determined based on the method 200 shown in FIG. 2. The heating circuit 830 may include an AC inverter 835 configured to convert a DC voltage ($V_{DC}$) from a power source 831 (e.g., power stage) to the AC heating current based on control signals from the control circuit 850. For example, the AC inverter 835 may include one or more switches (e.g., transistors) that are controlled ON/OFF by switching signal(s) generated by the control circuit 850. The control circuit 850 may modulate (e.g., pulse-width modulation (PWM), pulse-frequency modulation (PFM), etc.) the switching signals to maintain the AC heating current supplied to the battery pack 810. In a possible implementation, the AC inverter 835 includes two transistors connected in series between the power source 831 and a ground. The switching node between the two transistors can be capacitively coupled to the battery pack 810 to generate the AC heating current output, while blocking a DC current that could charge the battery.

The switching signal(s) may be at a frequency that is very high in order to maximize heating. For example, the switching signals having a frequency over 50 kHz may be used. Higher frequency may be justifiable for multiple reasons including reduction of battery degradation, compliance regulations, higher efficiency of battery heating, and/or reduced thermal losses in electronic components. As a result, high speed transistors with lower switching losses may be used for the inverter. The high-speed transistors may be implemented using gallium nitride (GaN) to achieve a smaller size and an increased efficiency (i.e., as compared to silicon Si) at these higher frequencies. An optimal combination of factors may be used to determine the ideal AC frequency applied including, but not limited to, AC resistance and switching losses.

In a possible implementation, the heating circuit 830 may further include a convection heater 836 to supplement the AC heating provided by the AC inverter 835. In other words, the heating circuit 830 can be dual-mode with a first mode being the AC heating and a second mode being the convection heating. The heat source of the convection heating may be the AC inverter 835. For example, the switching losses of the transistors of the AC inverter 835 may generate heat. A fan that is normally used to cool these components may be reversed or redirected based on the temperature of the battery pack ($T_{BATT}$). The fan operating in the reverse mode may blow air, warmed by the AC inverter 835, onto the battery pack 810 (for heating). Alternatively, the fan operating in a forward mode may blow cool ambient air onto the AC inverter 835 (for cooling). The fan may be operated in the forward mode when the battery pack 810 is warm (e.g., above a convection temperature threshold) and the fan may be operated in the reverse mode when the battery pack 810 is cold (e.g., below the convection temperature threshold). Alternatively, the fan may be turned OFF and not used. The control circuit 850 may be configured to control the fan based on the temperature of the battery pack ($T_{BATT}$), a temperature of the heating circuit 830 and/or an ambient temperature.

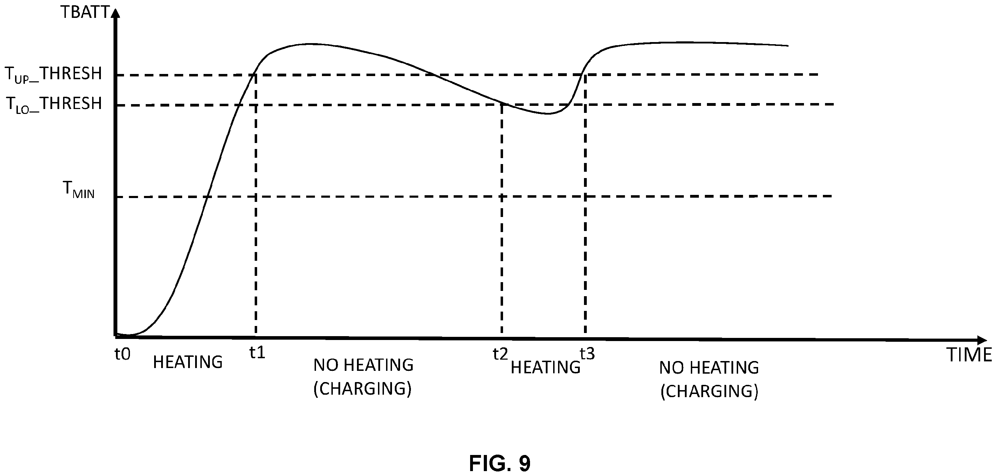

FIG. 9 is a graph showing the temperature of a battery pack heated for charging according to an implementation of the present disclosure. The graph shows the temperature of a battery pack. The temperature ($T_{BATT}$) may be measured by a control circuit 850 based on a resistance measured at a thermistor terminal (TH) of the battery pack 810. At time zero ($t_0$) the control circuit 850 configures the heating device 820 to heat the battery pack 810. In other words, at $t_0$ the heating circuit 830 is configured in a heating mode. The heating mode may be triggered by a battery pack being mechanically/electrically coupled to the heating device 820/ the heating circuit 830. In the heating mode, the heating circuit 830 generates an AC heating current to raise the temperature of the battery pack 810 in response to the AC heating current being dissipated in the AC internal resistance of the battery pack. The rate of the temperature increase may be a target rate or range (i.e., desired rate) based on the physical characteristics of the battery pack. Alternatively, the target rate may be based on a time to reach a desired temperature.

During the heating, the control circuit 850 may be configured to monitor (e.g., sample) the battery pack temperature ($T_{BATT}$) and compare the increasing battery pack temperature to a first threshold. At a first time ($t_1$), the battery pack temperature reaches the first threshold (i.e., upper threshold ($T_{UP\_THRESH}$)). Upon the battery pack temperature reaching/crossing the first threshold, the control circuit may configure the heating circuit 830 to stop heating the battery pack so that the battery pack can be charged. In other words, at $t_2$ the heating circuit 830 is configured in a no-heating mode. In a possible implementation, when the battery pack temperature is greater than or equal to the first threshold, then the battery pack may be charged at the maximum or fastest rate possible for the battery pack (i.e., fast charging). The fastest rate possible may be defined by a cell specification or accompanying compliance documents for the cell or battery pack, though it may alternatively just be limited by the maximum output of the charger product used. This rate determination may be based in part on temperature limits in addition to other criteria such as voltage, time, or values derived from them.

When heating is disabled while charging, the battery pack temperature ($T_{BATT}$) may decrease despite heating due to the charging. For example, in very cold environments, the battery pack temperature may decrease (during charging) to a temperature at which charging is no longer possible. Accordingly, the control circuit 850 may be configured to compare a decreasing battery pack temperature to a second threshold (i.e., $T_{LO\_THRESH}$). In other words, while the battery pack is in the heating mode, its temperature may be compared to a first threshold ($T_{UP\_THESH}$), and while the battery pack is in the no-heating mode, its temperature may be compared to a second threshold ($T_{LO\_THRESH}$). At a second time ($t_2$), the decreasing battery pack temperature reaches/crosses the second threshold. In response, the control circuit 850 configures the charging to stop and the heating to restart for a second heating period. The first threshold and the second threshold may provide a hysteresis to the control of the heating/charging to prevent any ON/OFF chatter that could otherwise exist with a single threshold. The second heating period continues until the temperature crosses the first threshold at a third time (t3), at which point the heating is disabled and charging resumes.

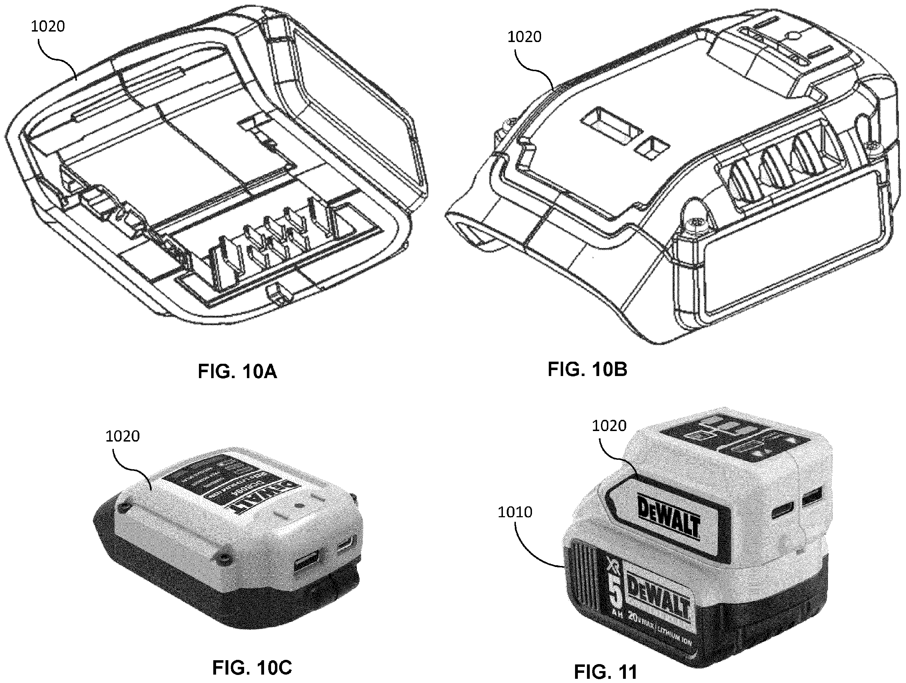

FIGs. 10A - 10C illustrate various isometric views of a device for heating a battery pack of a power tool to enable charging, according to a first possible implementation of the present disclosure. FIG. 11 illustrates an isometric view of the example device of FIGs. 10A-10C coupled to an example battery pack. The device is a heating attachment 1020. The heating attachment 1020 is a stand-alone device that is configured to be mechanically and electrically attached to a battery pack 1010 for heating. The heating attachment 1020 may include a housing. The heating attachment housing may include an interface for mating with the battery pack 1010. The interface may include a set of device terminals, a pair of rails, a pair of grooves, and a catch for a latch of the battery pack 1010.

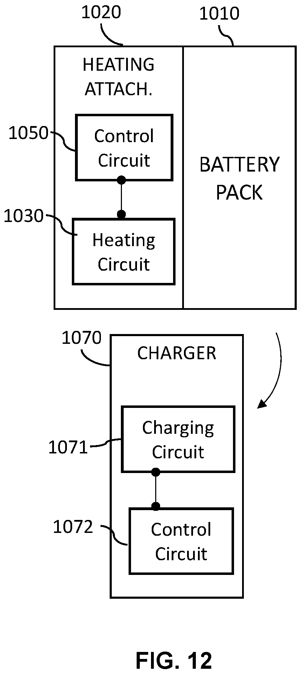

FIG. 12 illustrates a block diagram of the heating attachment 1020. The heating attachment 1020 may include heating circuit 1030 that is powered by the battery pack 1010. The heating attachment 1020 may include a control circuit 1050 that may be configured to determine the presence of the battery pack 1010, the temperature of the battery pack ($T_{BATT}$), and a state of charge or voltage of the battery pack. The control circuit 1050 may be further configured to enable the heating circuit 1030 of the heating attachment 1020 to heat the battery pack 1010 based on a first comparison of the battery pack temperature to a temperature threshold and based on a second comparison of the battery pack voltage to a voltage threshold. For example, the control circuit 1050 may prevent the battery pack 1010 having a low state of charge or voltage from being further depleted by heating even when the battery pack temperature is below a threshold. As a result, the heating attachment 1020 can only heat battery packs that are not too depleted (e.g., have a battery pack voltage above the second threshold). Further, the heating attachment approach can not automatically compensate for a battery pack cooling (below a threshold) during a charging process because changing between heating and charging requires a user interaction and insertion into charger. A heating attachment provides additional value to an already charged battery pack which is cold and becomes limited in discharge performance as a result of its higher resistance.

The heating attachment approach may include a (heating) control circuit 1050 in the heating attachment 1020 to control heating and a (charging) control circuit 1072 in the charger 1070 to control charging circuit 1071 for charging. In a possible implementation of the heating attachment 1020, when the battery pack temperature is below a first threshold and the battery pack voltage is above a second threshold, the control circuit 1050 may enable the heating circuit 1030 to heat the battery to a temperature for charging. The heating attachment 1020 may include one or more electronic indicators (e.g., lights, dials, display) to enable a user to understand the condition of the heating attachment 1020 and/or the battery pack 1010. For example, a green light may indicate that the battery pack has been heated and is ready for charging. In response, a user may remove the battery pack 1010 from the heating attachment 1020 and mechanically/electrically couple the (heated) battery pack to a charger 1070 for charging. The charger 1070 can be powered by a wall plug (i.e., mains) power.

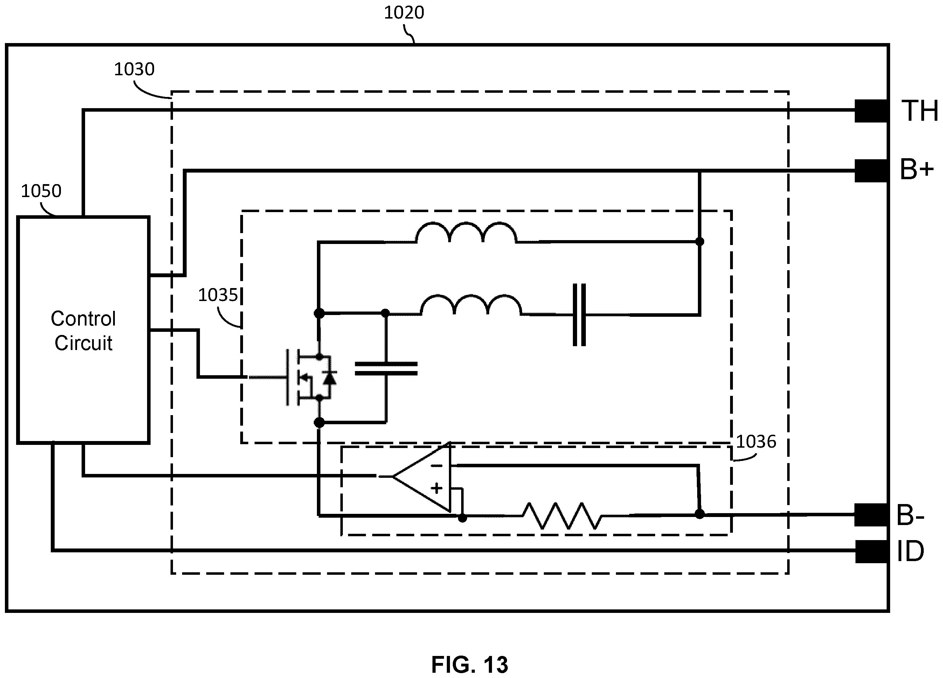

FIG. 13 schematically depicts a heating attachment 1020 for a battery pack of a power tool according to a possible implementation of the present disclosure. The heating attachment 1020 may include a thermistor terminal (TH), a battery pack ID terminal (ID), a positive terminal (B+), and a negative terminal (B-). A control circuit 1050 may be coupled to a battery pack temperature terminal (TH) upon which the control circuit 1050 receives a signal representative of the battery pack temperature and a battery pack identification terminal (ID) upon which the control circuit 1050 receives a signal representative of the battery pack ID. In response, the control circuit 1050 may configure an inverter 1035 to supply an AC heating current to the positive (B+) and negative (B-) terminals. In a possible implementation, the control circuit 1050 may further receive a current feedback signal corresponding to the AC heating current from a current monitoring circuit 1036.

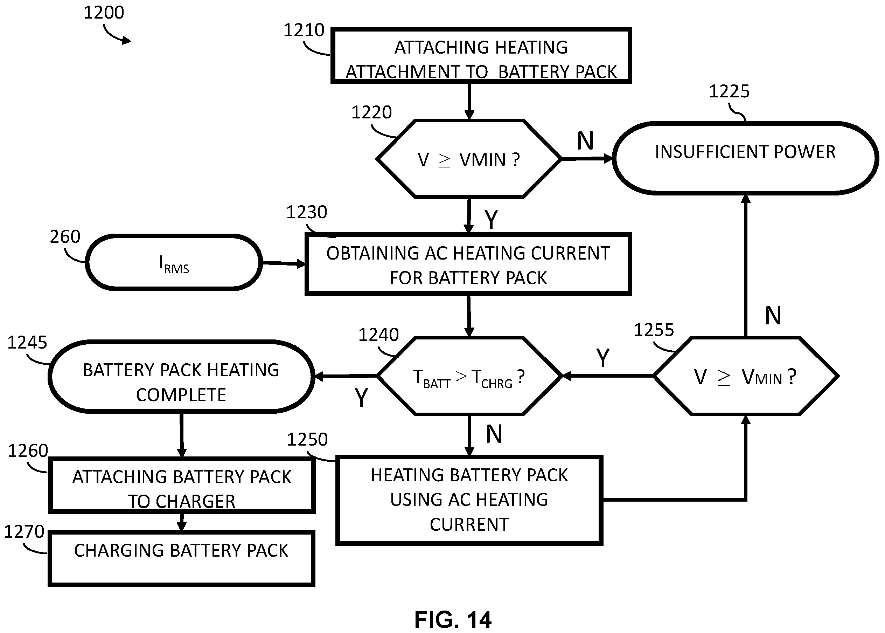

FIG. 14 is a flowchart of a method 1200 for charging a battery pack heated by a heating attachment, such as shown in FIGs. 10A-10C. The method 1200 may include a step 1210 of attaching a heating attachment to a battery pack. The method 1200 may further include a step 1220 of comparing the voltage of the attached battery pack to a threshold corresponding to a minimum voltage required for heating ($V_{MIN}$). If the battery pack has a battery pack voltage below the minimum voltage, then the method 1200 may conclude by placing the heating attachment in an insufficient power state 1225 (i.e., insufficient energy state), which may include providing an indication (e.g., visual, sound, etc.) to a user that the battery level (e.g., battery pack voltage) is too low for heating (e.g. undervoltage). Otherwise, the method 1200 includes a step 1230 of obtaining an AC heating current 260 (see FIG. 2) for the attached battery pack. The method 1200 may further include a step 1240 of comparing the battery pack temperature ($T_{BATT}$) to a threshold temperature for charging ($T_{CHRG}$). If the battery pack temperature is above the threshold temperature then the heating attachment may be placed in a battery pack heating complete state 1245, which can include providing an indication (e.g., visual, sound, etc.) to a user that the heating is complete. Otherwise, the method 1200 can proceed to a step 1250 of heating the battery pack using the AC heating current. The heating process may include a step 1255 of comparing the battery pack voltage of the attached battery pack to a threshold ($V_{MIN}$) so that if the battery pack becomes discharged during heating, the heating can stop and the battery pack can be placed in the insufficient power state 1225, as described previously. In the battery heating complete state 1245, the battery pack may be detached from the heating attachment and the method 1200 can proceed to a step 1260 of attaching the battery pack to a charger. After attaching the battery pack to the charger, the method 1200 can proceed to a step 1270 of charging the battery pack. Otherwise, the heated battery pack may be prepared for discharge use in a tool.

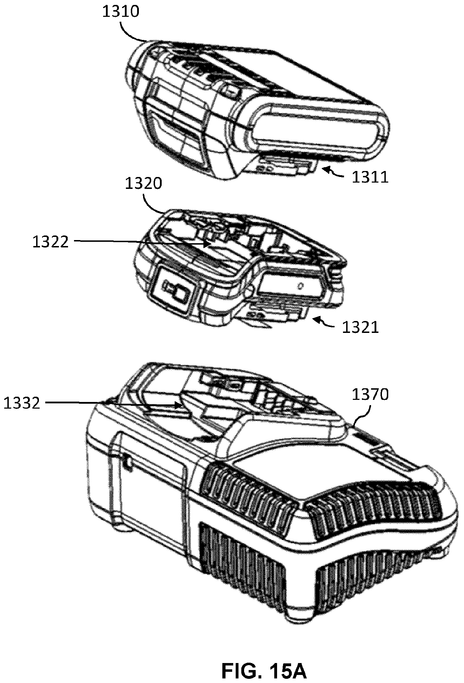

FIG. 15A is an exploded perspective view of a device for heating a battery pack of a power tool to enable charging according to a second possible implementation of the present disclosure. The device is a heating adapter 1320. The heating adapter 1320 is configured to mechanically (and electrically) couple to a charger 1370 on an input side and to mechanically (and electrically) couple to a battery pack 1310 on an output side. In other words, the heating adapter 1320 is configured to be positioned and attached between the battery pack 1310 and the charger 1370. The power source for the heating adapter 1320 is the charger 1370, while the charger 1370 may receive power from a wall plug, charging adapter, or the like. The battery pack 1310 may include a battery pack interface 1311. The battery pack interface 1311 may include mechanical features (e.g., rails, grooves, latches, etc.) configured to mechanically hold, support, and position the battery pack 1310 to another device. The battery pack interface 1311 may further include a plurality of electrical terminals, i.e., connectors (not illustrated) for electrical connection to transfer power to the battery pack (e.g., B+, B-) and for providing data regarding the battery pack (e.g., TH, ID). The mechanical features and electrical connectors of the battery pack interface 1311 may be positioned, sized, and arranged to mate with an interface 1332 of the charger 1370.

The heating adapter 1320 is designed to fit between the battery pack 1310 and the charger 1370. Accordingly, a first interface 1322 of the heating adapter 1320 may include mechanical features and electrical connectors that substantially match the mechanical features and electrical connectors of the charger interface 1332. The heating adapter 1320 may further include a second interface 1321. The second interface 1321 may include mechanical features and electrical connectors that substantially match the mechanical features and electrical connectors of the battery pack interface 1311.

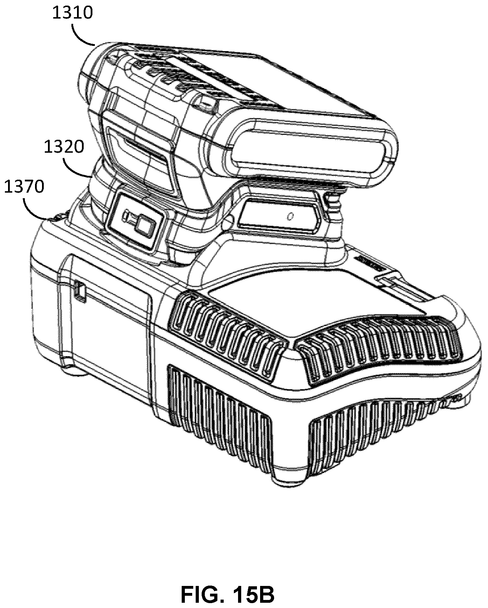

FIG. 15B is a perspective view of the heating adapter 1320 connected between the battery pack 1310 and the charger 1370 according to a possible implementation of the present disclosure. As shown, the battery pack interface 1311 is inserted into the first interface 1322 so that the battery pack 1310 is mechanically positioned and electrically connected to the heating adapter 1320. Additionally, the second interface 1321 is inserted into the charger interface 1332 so that the heating adapter 1320 is mechanically positioned and electrically connected to the charger 1370.

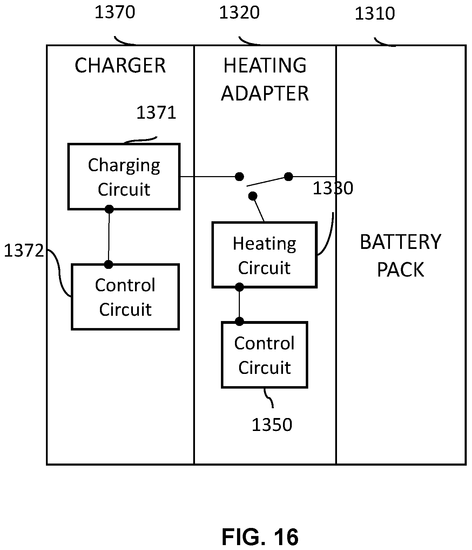

FIG. 16 illustrates a block diagram of the heating adapter 1320, the charger 1370 and the battery pack 1310.

The heating adapter 1320 may include a control circuit 1350 that is configured to monitor the temperature of the battery pack 1310 and to couple (i.e., switch) an output (i.e., DC charging current) of charging circuit 1371 to the terminals (B+/B-) of the battery pack 1310 when the battery pack 1310 is at a temperature suitable for charging. In the charging mode, the heating adapter 1320 functions as a pass through for signals from the charger. From the perspective of the charger 1370, coupling to the battery pack 1310 through the heating adapter 1320 in the charging mode, is equivalent to being directly coupled to the battery pack 1310.

When the battery pack is at a temperature that is too low for charging, the heating adapter 1320 may couple (i.e., switch) the output of heating circuit 1330 to the terminals of the battery pack 1310. The coupling to the heating circuit 1330 to the battery pack terminals decouples the output of the charging circuit 1371 from the battery pack terminals. The control circuit 1350 of the heating adapter 1320 may be configured to switch between heating and charging based on the temperature of the battery pack.

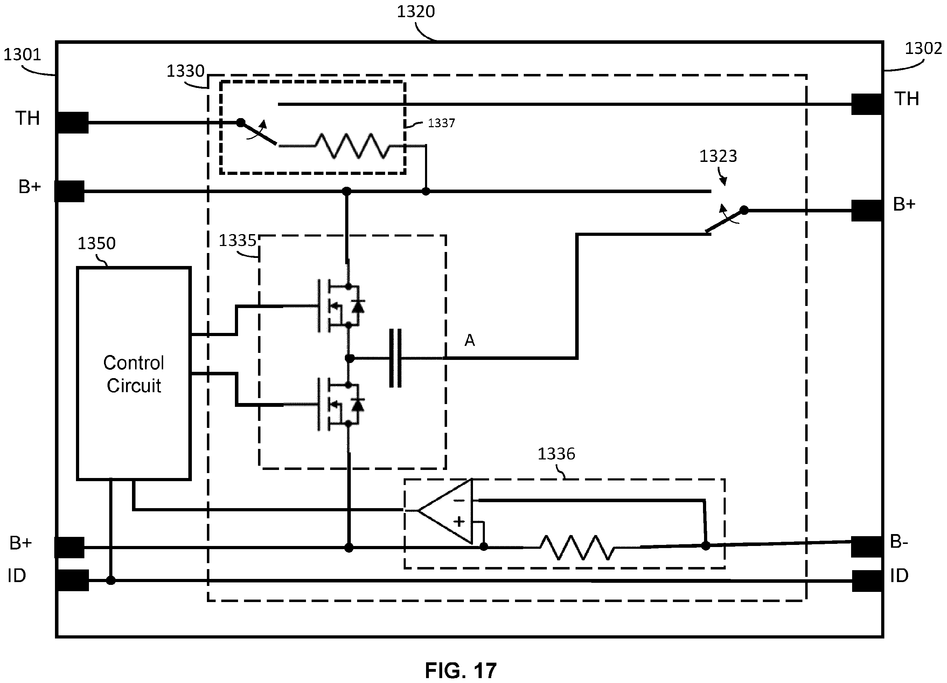

FIG. 17 schematically depicts the heating adapter 1320 for a battery pack of a power tool according to a possible implementation of the present disclosure. The heating adapter 1320 may include a thermistor terminal (TH), a battery pack ID terminal (ID), a positive terminal (B+) and a negative terminal (B-) on an input side 1301 and a corresponding thermistor terminal (TH), a corresponding battery pack ID terminal (ID), a corresponding positive terminal (B+) and a corresponding negative terminal (B-) on an output side 1302 of the heating adapter 1320.

The heating adapter 1320 may be configured in a heating mode to heat a battery pack or a charging mode to charge the battery pack. While the heating adapter 1320 is in a heating mode, the control circuit 1350 may configure a switch 1323 to couple an AC inverter 1335 to the battery pack terminals so that the battery pack attached to the output side 1302 of the heating adapter 1320 can receive an AC heating current from the AC inverter 1335. While the heating adapter 1320 is in the charging mode, the control circuit 1350 may configure the switch 1323 to couple a charger, attached to the input side 1301 of the heating adapter 1320, to the battery pack terminals attached to the output side 1302 of the heating adapter 1320. While heating, the control circuit 1350 may receive feedback corresponding to the AC heating current from a current monitoring circuit 1336.

The heating adapter 1320 may further include a temperature simulation circuit 1337 that is used to trigger a charger to supply power to enable the heating adapter 1320 for operation when the temperature of the battery pack would otherwise be too low. For example, the thermistor of a battery pack at a lower temperature may disable the output of a charger. This is undesirable for the heating adapter 1320 because it receives its power for heating the battery pack from the charger. In these situations, the temperature simulation circuit may switch to a resistor that simulates a higher battery temperature to enable the charger.

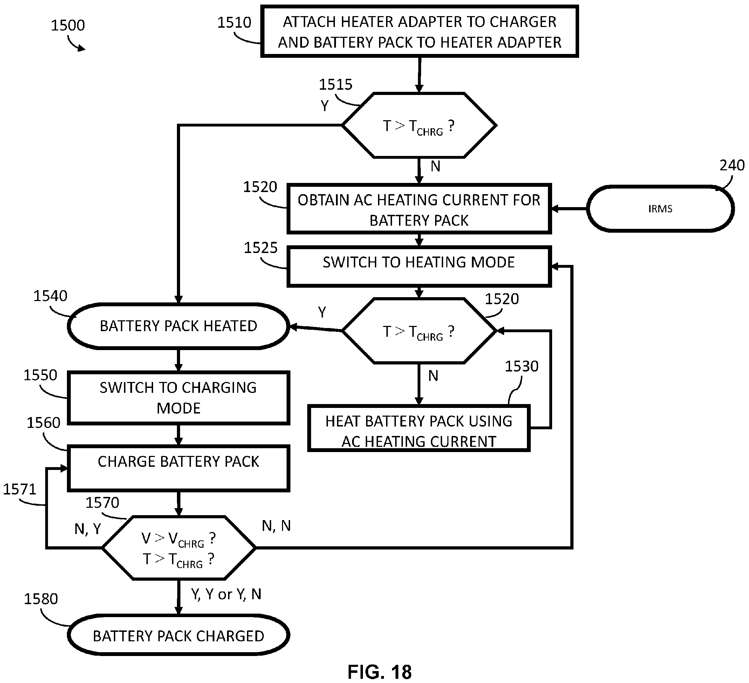

FIG. 18 is a flowchart of a method 1500 for charging a battery pack heated by the heating adapter 1320. The method 1500 includes a step 1510 of attaching the heater adapter to a charger and attaching the battery pack to the heater adapter. The steps may be performed in any order to form a connected stack including the heater adapter between the charger and the battery pack. The method 1500 may further include a step 1515 of comparing the battery pack temperature to a threshold temperature for charging ($T_{CHRG}$). If the battery pack temperature is below the threshold, then the method 1500 includes a step 1520 of obtaining an AC heating current 240 for the battery pack (e.g., see FIG. 2) and a step 1525 of configuring the heating adapter 1320 to switch the heating adapter into a heating mode. The method 1500 may include a step 1530 comparing the battery pack temperature to the charging threshold temperature. If the battery pack temperature is less than the charging threshold temperature than the method 1500 continues to a step 1535 of heating the battery pack using the AC heating current until the battery pack temperature reaches the charging threshold temperature (step 1530), at which point, in a step 1540 the battery pack is defined as heated and ready to charge. After the battery pack is heated, the method 1500 may include a step 550 of switching the heater adapter into a charging mode. Thereafter, the method 1500 may include a step 1560 of charging the battery pack.

During charging, the method 1500 may include a step 1570 of comparing the battery pack voltage to a charging threshold voltage and the battery pack temperature to a charging temperature threshold. If (i) the battery pack voltage is below a voltage threshold ($V < V_{CHRG}$) and (ii) the battery pack temperature is greater than the threshold temperature for charging ($T > T_{CHRG}$), then the method 1500 continues to charging the battery pack in step 1560. If the battery pack temperature drops below the threshold temperature ($T < T_{CHRG}$) for charging before the charging is complete ($V < V_{CHRG}$), then the method 1500 continues to the step 1525 to switch the heating adapter from the charging mode to the heating mode so that the heating process can be repeated. The heating can continue as described above. If the charging is complete ($V > V_{CHRG}$) before the battery pack temperature drops below the charging threshold temperature ($T > T_{CHRG}$) then the method 1500 continues to a step 1580 and indicates that the battery pack has been charged.-

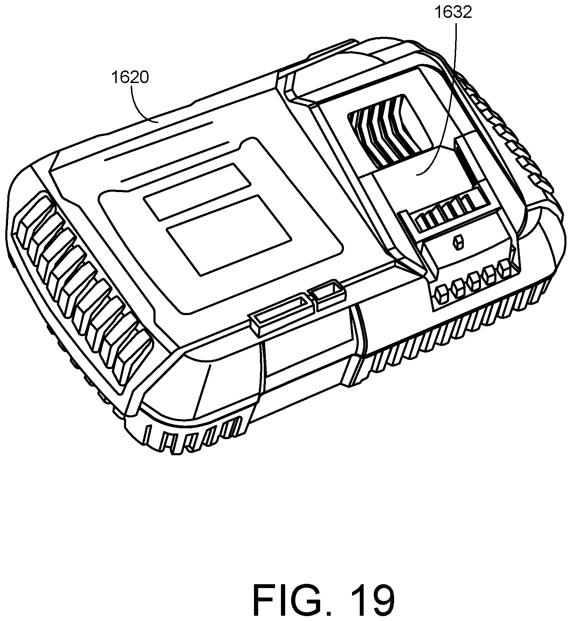

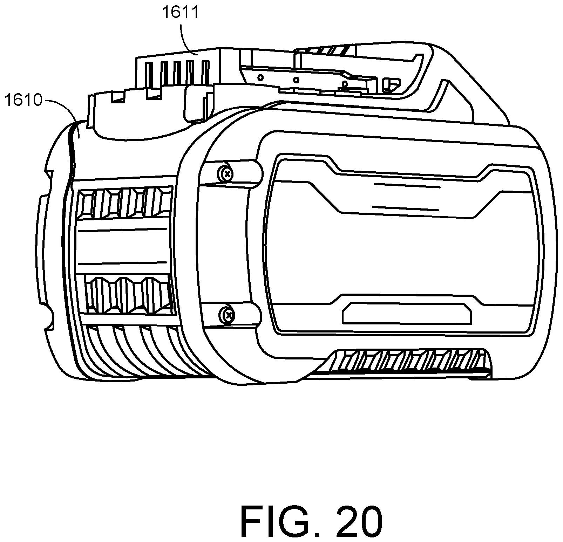

FIG. 19 illustrates a device for heating a battery pack of a power tool to enable charging according to a third possible implementation of the present disclosure. FIG. 20 illustrates an isometric view of an example battery pack that may be charged by the device of FIG. 19. The device is a charger 1620 with built-in heating capabilities. The charger 1620 can be powered by a wall plug (i.e., mains) power to supply AC power to a charging circuit 1671. The charger 1620 is configured to mechanically (and electrically) couple to a battery pack 1610. The battery pack 1610 may include a battery pack interface 1611. The battery pack interface 1611 may include mechanical features (e.g., rails, grooves, latches, etc.) configured to mechanically hold, support, and position the battery pack 1310 to another device. The battery pack interface 1611 may further include a plurality of electrical terminals, i.e., connectors (not illustrated) for electrical connection to transfer power to the battery pack (e.g., B+, B-) and for providing data regarding the battery pack (e.g., TH, ID). The mechanical features and electrical connectors of the battery pack interface 1611 may be positioned, sized, and arranged to mate with an interface 1632 of the charger 1620.

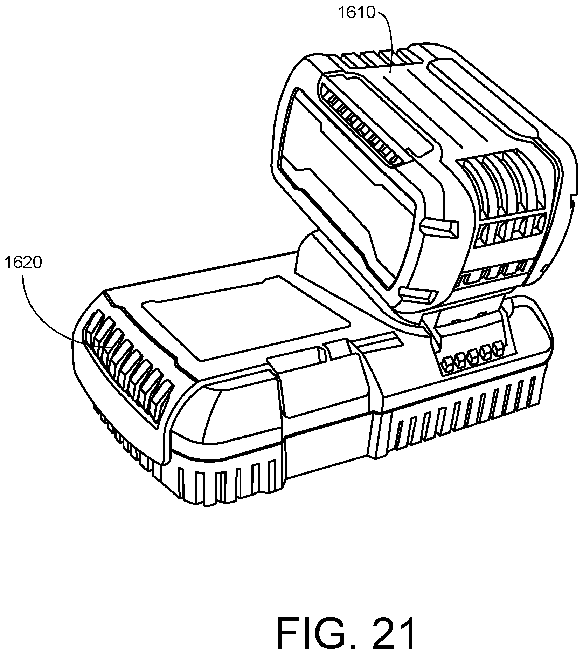

FIG. 21 illustrates the battery pack 1610 mated to the charger 1620.

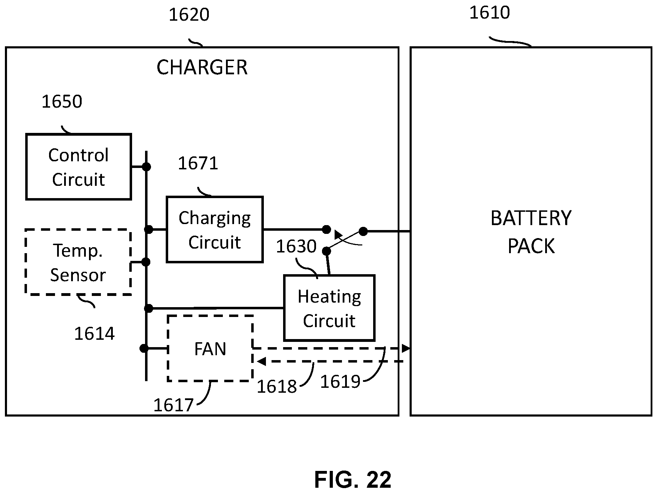

FIG. 22 illustrates a block diagram of the charger 1620 and the battery pack 1610. The charger 1620 may include a control circuit 1650 that can configure the charger 1620 in a heating mode or a charging mode. In the heating mode, the control circuit 1650 configures a heating circuit 1630 to heat the battery pack using an AC heating current. The AC heating current may be configured and based upon characteristics of the battery pack 1610. The heating circuit 1630 may receive AC power from the wall plug. The control circuit 1650 may receive a battery pack temperature from a battery pack temperature sensor and the heating mode or the charging mode may be selected and controlled based on the battery pack temperature. For example, when the battery pack is at a temperature within a range for charging, the control circuit 1650 may disable, bypass, or decouple the heating circuit 1630 and enable a charging circuit 1671 to charge the battery pack with a DC charging current. Alternatively, when the battery pack 1610 is at a temperature below the range for charging, the control circuit 1650 may disable, bypass, or decouple the charging circuit 1671 and enable the heating circuit 1630 to heat the battery with an AC heating current.

In a possible implementation the charger 1620 may include a fan 1617 configured to cool the electronics (e.g., power electronics) of the charging circuit 1671 and/or the heating circuit 1630 based on a temperature corresponding to one or both of these circuits. The temperature may be measured by a temperature sensor 1614 of the charger 1620 that can be positioned proximate to (e.g., on the same circuit board as) the heating circuit 1630 and/or the charging circuit 1671. In operation, the control circuit 1650 may activate the fan 1617 when the battery pack temperature is above a threshold. The control circuit 1650 may be further configured to control the direction of the flow of air moved by the fan. The direction of the air may be a first direction 1618 to cool the charging circuit 1671 and/or heating circuit 1630. Alternatively, the direction of the air may be in a second direction 1619 to heat the battery pack 1610.

The control circuit 1650 can further control the direction of the fan 1617 based on a battery pack temperature received from the battery pack 1610. For example, when the charger temperature (i.e., measured by the temperature sensor 1614) is above a first threshold, the control circuit may enable the fan 1617 (i.e., turn the fan ON) then, when the battery temperature is below a second threshold, the control circuit may switch the direction of the fan 1617 so that air, heated by the charging circuit 1671 and/or the heating circuit 1630 is blown in a second direction 1619 towards the battery pack to heat the battery pack 1610. The fan 1617 may provide convection heating when the AC heating is no longer applied. For example, when the AC heating is turned OFF for charging, the convection heating may be activated to help maintain the battery pack within the temperature range for charging (e.g., fast charging).

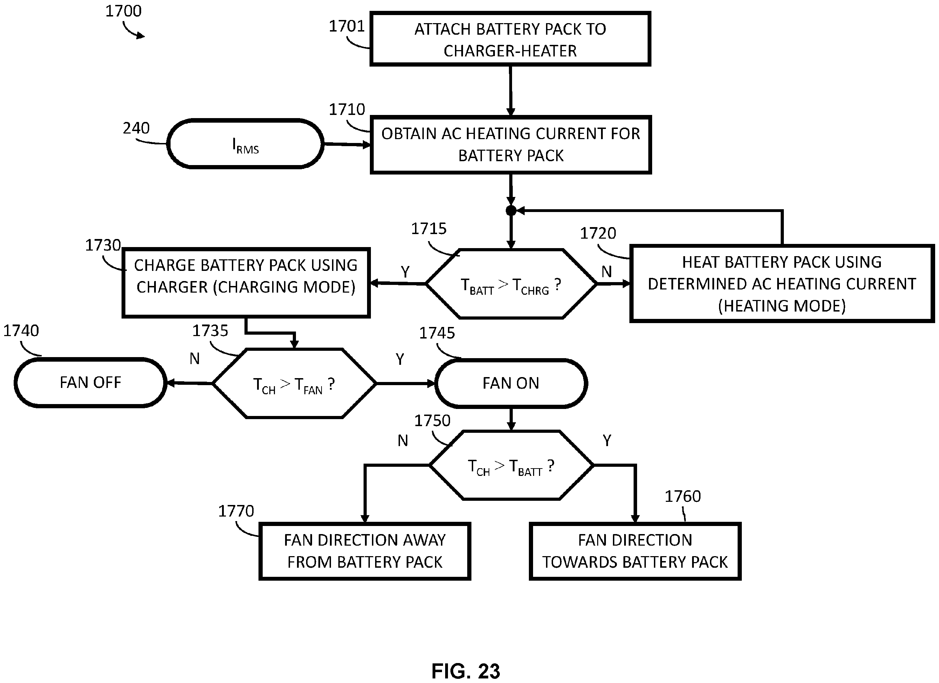

FIG. 23 is a flowchart of a method 1700 for charging a battery pack heated by the charger. The method 1700 may include a step 1701 of attaching the battery pack to the charger. The method 1700 may further include a step 1710 of obtaining an AC heating current 240 for the battery pack (e.g., see FIG. 2). The method 1700 may further include a step 1715 of comparing a battery pack temperature ($T_{BATT}$) to a charging threshold temperature ($T_{CHRG}$). If the battery pack temperature is less than the charger threshold temperature (i.e., $T_{BATT} < T_{CHRG}$), then the method 1700 may further include a step 1720 of configuring the charger in a heating mode to heat the battery pack using the determined AC heating current. If the battery pack is hotter than the threshold temperature for charging (i.e., $T_{BATT} > T_{CHRG}$), then the method 1700 may further include a step 1730 of configuring the charger in a charging mode to charge the battery pack using a DC charging current. In a possible implementation, the charging mode includes no AC heating and the heating mode includes no DC charging. While in the charging mode, the method 1700 may continue to a step 1735 of comparing the temperature of the charger ($T_{CH}$) to a threshold temperature for enabling the fan ($T_{FAN}$). If the charger temperature is not greater than the fan threshold ($T_{CH} < T_{FAN}$) then the method 1700 may further include a step 1740 of disabling the fan (i.e., turning the fan OFF). If the charger temperature is greater than the fan threshold ($T_{CH} > T_{FAN}$) then the method 1700 may further include a step 1745 of enabling the fan (i.e., turning the fan ON). The method 1700 may further include a step 1750 of comparing the charger temperature ($T_{CH}$) to the battery pack temperature ($T_{BATT}$). If the charger temperature is greater than the battery pack temperature ($T_{CH} > T_{BATT}$), then the method 1700 may include a step 1760 of adjusting the fan direction (i.e., rotation direction) so that the hotter air from the charger is directed towards the battery pack. In other words, the fan direction is towards the battery pack. If the charger temperature is not greater than the battery pack temperature ($T_{CH} < T_{BATT}$), then the method 1700 may include a step 1770 of adjusting the fan direction (i.e. rotation direction) so that the cooler air from the battery pack is directed towards the charger. In other words, the fan direction is away from the battery pack.

In the specification and/or figures, typical embodiments have been disclosed. The present disclosure is not limited to such exemplary embodiments. The use of the term "and/or" includes any and all combinations of one or more of the associated listed items. The figures are schematic representations and so are not necessarily drawn to scale. Unless otherwise noted, specific terms have been used in a generic and descriptive sense and not for purposes of limitation.

Unless defined otherwise, all technical and scientific terms used herein have the same meaning as commonly understood by one of ordinary skill in the art. Methods and materials similar or equivalent to those described herein can be used in the practice or testing of the present disclosure. As used in the specification, and in the appended claims, the singular forms "a," "an," "the" include plural referents unless the context clearly dictates otherwise. The term "comprising" and variations thereof as used herein is used synonymously with the term "including" and variations thereof and are open, non-limiting terms. The terms "optional" or "optionally" used herein mean that the subsequently described feature, event or circumstance may or may not occur, and that the description includes instances where said feature, event or circumstance occurs and instances where it does not. Ranges may be expressed herein as from "about" one particular value, and/or to "about" another particular value. When such a range is expressed, an aspect includes from the one particular value and/or to the other particular value. Similarly, when values are expressed as approximations, by use of the antecedent "about," it will be understood that the particular value forms another aspect. It will be further understood that the endpoints of each of the ranges are significant both in relation to the other endpoint, and independently of the other endpoint.

Some implementations may be implemented using various semiconductor processing and/or packaging techniques. Some implementations may be implemented using various types of semiconductor processing techniques associated with semiconductor substrates including, but not limited to, for example, Silicon (Si), Gallium Arsenide (GaAs), Gallium Nitride (GaN), Silicon Carbide (SiC) and/or so forth.

While certain features of the described implementations have been illustrated as described herein, many modifications, substitutions, changes and equivalents will now occur to those skilled in the art. It is, therefore, to be understood that the appended claims are intended to cover all such modifications and changes as fall within the scope of the implementations. It should be understood that they have been presented by way of example only, not limitation, and various changes in form and details may be made. Any portion of the apparatus and/or methods described herein may be combined in any combination, except mutually exclusive combinations. The implementations described herein can include various combinations and/or sub-combinations of the functions, components and/or features of the different implementations described.

It will be understood that, in the foregoing description, when an element is referred to as being on, connected to, electrically connected to, coupled to, or electrically coupled to another element, it may be directly on, connected or coupled to the other element, or one or more intervening elements may be present. In contrast, when an element is referred to as being directly on, directly connected to or directly coupled to another element, there are no intervening elements present. Although the terms directly on, directly connected to, or directly coupled to may not be used throughout the detailed description, elements that are shown as being directly on, directly connected or directly coupled can be referred to as such. The claims of the application, if any, may be amended to recite exemplary relationships described in the specification or shown in the figures.

As used in this specification, a singular form may, unless definitely indicating a particular case in terms of the context, include a plural form. Spatially relative terms (e.g., over, above, upper, under, beneath, below, lower, and so forth) are intended to encompass different orientations of the device in use or operation in addition to the orientation depicted in the figures. In some implementations, the relative terms above and below can, respectively, include vertically above and vertically below. In some implementations, the term adjacent can include laterally adjacent to or horizontally adjacent to.

**Claims**

1.   A method for heating a battery pack of a power tool, the method comprising:

   coupling the battery pack to a heating device;
   receiving, at the heating device, a battery pack identification from the battery pack;
   determining an AC internal resistance of the battery pack using the heating device;
   determining a set of details of the battery pack based on the battery pack identification and/or the AC internal resistance;
   computing, at the heating device, an AC heating current based on the set of details of the battery pack and the AC internal resistance; and
   transmitting the AC heating current from the heating device to a set of terminals of the battery pack to heat the battery pack.

2.   The method according to claim 1, wherein determining the set of details includes querying a database based on the battery pack identification.

3.   The method according to claim 2, wherein the set of details include any of a mass, a target AC internal resistance, and a target heating rate.

4.   The method according to claim 2 or 3, further comprising:

   monitoring a temperature of the battery pack while the AC heating current is transmitted to the battery pack; and
   comparing a rate of change of the temperature to the target heating rate.

5.   The method according to claim 4, further comprising:
   ceasing to transmit the AC heating current from the heating device to the battery pack when the rate of the change of the temperature and the target heating rate are different by a threshold amount.

6.   The method according any preceding claim, wherein determining the set of details includes estimating a mass of the battery pack based on the AC internal resistance.

7.   The method according to claim 2, wherein:

   the set of details of the battery pack include a mass (m) of the battery pack and a target heating rate (r);
   computing the AC heating current ($I_{RMS}$) based on the set of details of the battery pack and the AC internal resistance includes solving an equation:

$$I_{RMS} = K \sqrt{\frac{r \cdot m}{R_{AC}}},$$

   wherein K is a constant.

8. The method according to any preceding claim, wherein receiving the battery pack identification from the battery pack includes:

measuring a resistance of a discrete resistor included in the battery pack for identifying the battery pack: and/or
recalling a value from a memory included in the battery pack for identifying the battery pack; and/or
receiving a message from a microcontroller included in the battery pack for identifying the battery pack.

9. The method according to any preceding claim, wherein measuring the AC internal resistance includes:

applying an AC excitation current to the set of terminals of the battery pack;
sensing a voltage across the set of terminals of the battery pack in response to the AC excitation current; and
determining the AC internal resistance as a ratio of the AC excitation current to the sensed voltage.

10. A system for heating a battery pack of a power tool comprising:

a heater coupled to a positive terminal and a negative terminal of the battery pack, the heater including an AC inverter configured to generate an AC heating current to heat the battery pack;
an AC resistance (ACR) measurement circuit coupled to the positive terminal and the negative terminal and configured to measure an AC resistance of the battery pack; and
a control circuit configured to:

receive a battery pack identification from an ID terminal of the battery pack;
receive the AC resistance of the battery pack from the ACR measurement circuit;
determine the AC heating current based on the battery pack identification and the AC resistance;
control the AC inverter of the heater to supply the AC heating current to the positive terminal and the negative terminal of the battery pack; and
determine when the battery pack is heated to enable charging based on a temperature measurement from a thermistor terminal of the battery pack.

11. The system according to claim 10, wherein:

the battery pack identification is a resistance of an ID resistor coupled to the ID terminal of the battery pack, the resistance corresponding to a mass of the battery pack; and
the AC heating current is based on the mass of the battery pack and the AC resistance of the battery pack.

12. The system according to claim 10 or 11, wherein the ACR measurement circuit is configured to:

supply an AC excitation current to the positive terminal and the negative terminal of the battery pack;
measure a voltage between the positive terminal and the negative terminal of the battery pack; and
determine the AC resistance of the battery pack based on a ratio of the measured voltage to the AC excitation current.

13. The system according to any of claims 10 to 12, wherein:

the AC inverter includes at least one transistor; and
the control circuit is further configured to generate a modulation signal based on the AC heating current to switch the at least one transistor.

14. The system according to any of claims 10 to 13, wherein the heater, the ACR measurement circuit, and the control circuit are implemented as a heating attachment configured to attach to the battery pack for heating while the battery pack is not on a charger.

15. The system according to claim 14, wherein the heater, the ACR measurement circuit, and the control circuit are implemented as a heater adapter configured to attach between the battery pack and a charger.

16. The system according to claim 15, wherein the control circuit of the heater adapter is further configured:

enable the heater to transmit the AC heating current to the battery pack for heating and disable a charger from transmitting a DC current to the battery pack for charging when the temperature measurement is below a threshold; and

disable the heater from transmitting the AC heating current to the battery pack for heating and enable the charger to transmit the DC current to the battery pack for charging when the temperature measurement is above a threshold.

17. A device for heating and charging a battery pack of a power tool comprising:

a heater coupled to a positive terminal and a negative terminal of the battery pack, the heater configured to generate an AC heating current;

an ACR measurement circuit coupled to the positive terminal and the negative terminal and configured to measure an AC resistance of the battery pack;

a charger coupled to the positive terminal and the negative terminal of the battery pack, the charger configured to supply a DC charging current; and

a control circuit configured to:

receive a battery pack identification from an ID terminal of the battery pack;

receive the AC resistance of the battery pack from the ACR measurement circuit;

receive a temperature of the battery pack from a temperature sensor in the battery pack;

determine the AC heating current based on the battery pack identification and the AC resistance;

control the heater to supply the AC heating current to the positive terminal and the negative terminal of the battery pack, to heat the battery pack while the temperature of the battery pack is below a threshold temperature; and

control the charger to supply the DC charging current to the positive terminal and the negative terminal of the battery pack, to charge the battery pack while the temperature of the battery pack is above the threshold temperature.

18. The device according to claim 17, further comprising:

a fan configured by the control circuit to move air across the charger to the battery pack while the battery pack is being charged to help heat the battery pack.

FIG. 1

200

```
                    ┌─────────────────────────────────────────────────────┐
210 ─────           │        COUPLING BATTERY PACK TO HEATING DEVICE       │
                    └─────────────────────────────────────────────────────┘
                                            │
                                            ▼
                    ┌─────────────────────────────────────────────────────┐
220 ─────           │     RECEIVING, AT THE HEATING DEVICE, A BATTERY PACK │
                    │       IDENTIFICATION (ID) FROM THE BATTERY PACK      │
                    └─────────────────────────────────────────────────────┘
                                            │
                                            ▼
                    ┌─────────────────────────────────────────────────────┐
230 ─────           │  DETERMINING AN AC INTERNAL RESISTANCE ($R_{AC}$) OF THE BATTERY │
                    │           PACK USING THE HEATING DEVICE              │
                    └─────────────────────────────────────────────────────┘
                                            │
                                            ▼
                    ┌─────────────────────────────────────────────────────┐
240 ─────           │  DETERMINING A SET OF DETAILS OF THE BATTERY PACK BASED ON │
                    │           THE BATTERY PACK ID AND/OR $R_{AC}$        │
                    └─────────────────────────────────────────────────────┘
                                            │
                                            ▼
                    ┌─────────────────────────────────────────────────────┐
250 ─────           │   COMPUTING AN  AC HEATING CURRENT ($I_{RMS}$) BASED ON THE │
                    │         DETERMINED SET OF DETAILS AND $R_{AC}$       │
                    └─────────────────────────────────────────────────────┘
                                            │
                                            ▼
                           ╭─────────────────────────────╮
260 ─────                  │           $I_{RMS}$         │
                           ╰─────────────────────────────╯
```

**FIG. 2**

**239** Selecting a FREQUENCY FOR AC EXCITATION CURRENT

**232** Applying an AC EXCITATION SIGNAL TO BATTERY PACK

**234** Measuring a Response Signal to the AC Excitation Signal at the Terminals of the Battery Pack

**236** Computing $R_{AC}$ OF BATTERY PACK BASED ON the RESPONSE SIGNAL

**238** $R_{AC}$

**230**

**FIG. 3A**

Real Resistance vs. Frequency at 0°C

FIG. 3B

EP 4 576 492 A1

**240**

**242** — BATTERY PACK ID

**244** — DETERMINE ANY OF A MASS (m), A TARGET ACR ($R_{AC}$), AND A TARGET HEATING RATE (r), BASED ON THE BATTERY PACK ID

**246** — DATABASE

**248** — m, $R_{AC}$, r

**FIG. 4A**

EP 4 576 492 A1

240'

243

Measure $R_{AC}$

245

DETERMINE MASS (m) AND/OR TARGET HEATING
RATE(r) BASED ON Measured $R_{AC}$

247

m, r

**FIG. 4B**

Example Battery Pack Mass vs. ACR

$y = 14838.7x^{-0.9}$

Battery Pack ACR (mΩ)

Battery Pack Mass (grams)

FIG. 5

24

EP 4 576 492 A1

246

| Battery-Pack ID | Mass (g) | Target $R_{AC}$ (mΩ) | Target Heating Rate (°C/min.) | Max Charge Rate (A) | Max Discharge Rate (A) | Target Heating Current ($A_{rms}$) |
|---|---|---|---|---|---|---|
| R | 350 | 90 | 4 | 4A | 20A | 8.9 |
| T | 450 | 50 | 6 | 6A | 30A | 16.5 |
| W | 650 | 30 | 5 | 8A | 40A | 23.5 |
| X | 1000 | 30 | 7 | 12A | 80A | 34.3 |
| Y | 1200 | 15 | 5 | 16A | 120A | 45.0 |
| Z | 1500 | 18 | 4 | 20A | 180A | 41.1 |

601     602     603     604     605     606     607

**FIG. 6**

Example Battery ID Correlation with Mass

■ ID-1  ■ ID-2  ■ ID-3  ■ ID-4

FIG. 7

EP 4 576 492 A1

**FIG. 8**

EP 4 576 492 A1

**FIG. 9**

FIG. 10B

FIG. 10A

FIG. 11

FIG. 10C

**FIG. 12**

**FIG. 13**

EP 4 576 492 A1

**1200**

**1210** ATTACHING HEATING ATTACHMENT TO BATTERY PACK

**1220** $V \geq VMIN$ ?

**N** → **1225** INSUFFICIENT POWER

**Y**

**260** $I_{RMS}$ →

**1230** OBTAINING AC HEATING CURRENT FOR BATTERY PACK

**1240** $T_{BATT} > T_{CHRG}$ ?

**1255** $V \geq V_{MIN}$ ?

**N**

**Y**

**1245** BATTERY PACK HEATING COMPLETE

**Y**

**N**

**1250** HEATING BATTERY PACK USING AC HEATING CURRENT

**1260** ATTACHING BATTERY PACK TO CHARGER

**1270** CHARGING BATTERY PACK

**FIG. 14**

FIG. 15A

EP 4 576 492 A1

FIG. 15B

**FIG. 16**

EP 4 576 492 A1

**FIG. 17**

EP 4 576 492 A1

**FIG. 18**

1632

1620

FIG. 19

# FIG. 20

FIG. 21

FIG. 22

1700

1701 ATTACH BATTERY PACK TO CHARGER-HEATER

1710 OBTAIN AC HEATING CURRENT FOR BATTERY PACK

240 $I_{RMS}$

1715 $T_{BATT} > T_{CHRG}$ ?

1720 HEAT BATTERY PACK USING DETERMINED AC HEATING CURRENT (HEATING MODE) — N

1730 CHARGE BATTERY PACK USING CHARGER (CHARGING MODE) — Y

1735 $T_{CH} > T_{FAN}$ ?

1740 FAN OFF — N

1745 FAN ON — Y

1750 $T_{CH} > T_{BATT}$ ?

1760 FAN DIRECTION TOWARDS BATTERY PACK — Y

1770 FAN DIRECTION AWAY FROM BATTERY PACK — N

FIG. 23

**EP 4 576 492 A1**

EUROPEAN SEARCH REPORT

Europäisches Patentamt
European Patent Office
Office européen des brevets

**EUROPEAN SEARCH REPORT**

Application Number

EP 24 21 9527

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/094970 A1 (BOBER GREG [US]) 2 April 2015 (2015-04-02) * abstract; claims 1,5,7-9; figures 1-3,11-13 * * paragraph [0001] - paragraph [0002] * * paragraph [0018] * * paragraph [0039] - paragraph [0042] * * paragraph [0046] - paragraph [0065] * | 1-18 | INV. H02J7/00 B25F5/00 H01M10/615 |
| A | WO 2023/076385 A2 (MILWAUKEE ELECTRIC TOOL CORP [US]) 4 May 2023 (2023-05-04) * abstract; claims 1,6,13; figure 7a * * paragraph [0096] - paragraph [0101] * | 1-18 | |
| A | US 2020/381788 A1 (DU XINXIN [CN] ET AL) 3 December 2020 (2020-12-03) * abstract; claim 1; figures 1,2 * * paragraph [0030] - paragraph [0036] * | 1-18 | |
| A | US 2023/402672 A1 (CHEN XINWEI [CN] ET AL) 14 December 2023 (2023-12-14) * abstract; claims 1-10; figures 1-5 * * paragraph [0089] - paragraph [0092] * * paragraph [0132] - paragraph [0140] * * paragraph [0155] - paragraph [0161] * | 1-18 | TECHNICAL FIELDS SEARCHED (IPC) H02J H01M B25H B25F |
| A | US 2021/046630 A1 (VERBRUGGE BRANDON L [US] ET AL) 18 February 2021 (2021-02-18) * abstract; claim 1; figure 1 * * paragraph [0058] * | 1-18 | |
| A | US 7 683 570 B2 (TESLA MOTORS INC [US]) 23 March 2010 (2010-03-23) * the whole document * | 1-18 | |

The present search report has been drawn up for all claims

| Place of search | Date of completion of the search | Examiner |
|---|---|---|
| Munich | 14 April 2025 | Rother, Stefan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

43

**EP 4 576 492 A1**

## ANNEX TO THE EUROPEAN SEARCH REPORT
## ON EUROPEAN PATENT APPLICATION NO.

EP 24 21 9527

This annex lists the patent family members relating to the patent documents cited in  the above-mentioned European search report.
The members are as contained in the European Patent Office EDP file on
The European Patent Office is in no way liable for these particulars which are merely given for the purpose of information.

14-04-2025

| Patent document cited in search report | | | Publication date | Patent family member(s) | | | Publication date |
|---|---|---|---|---|---|---|---|
| US 2015094970 | A1 | | 02-04-2015 | CN | 105594055 | A | 18-05-2016 |
| | | | | EP | 3054522 | A1 | 10-08-2016 |
| | | | | JP | 6397035 | B2 | 26-09-2018 |
| | | | | JP | 2017503177 | A | 26-01-2017 |
| | | | | KR | 20160054503 | A | 16-05-2016 |
| | | | | US | 2015094970 | A1 | 02-04-2015 |
| | | | | WO | 2015050327 | A1 | 09-04-2015 |
| WO 2023076385 | A2 | | 04-05-2023 | US | 2024429728 | A1 | 26-12-2024 |
| | | | | WO | 2023076385 | A2 | 04-05-2023 |
| US 2020381788 | A1 | | 03-12-2020 | CN | 110970691 | A | 07-04-2020 |
| | | | | EP | 3771022 | A1 | 27-01-2021 |
| | | | | JP | 6951409 | B2 | 20-10-2021 |
| | | | | JP | 2020194766 | A | 03-12-2020 |
| | | | | US | 2020381788 | A1 | 03-12-2020 |
| | | | | WO | 2020238468 | A1 | 03-12-2020 |
| US 2023402672 | A1 | | 14-12-2023 | CN | 117157802 | A | 01-12-2023 |
| | | | | EP | 4287350 | A1 | 06-12-2023 |
| | | | | JP | 7622242 | B2 | 27-01-2025 |
| | | | | JP | 7622242 | B6 | 07-03-2025 |
| | | | | JP | 2024508855 | A | 28-02-2024 |
| | | | | KR | 20230142540 | A | 11-10-2023 |
| | | | | US | 2023402672 | A1 | 14-12-2023 |
| | | | | WO | 2023097547 | A1 | 08-06-2023 |
| US 2021046630 | A1 | | 18-02-2021 | US | 2014131059 | A1 | 15-05-2014 |
| | | | | US | 2021046630 | A1 | 18-02-2021 |
| | | | | US | 2022029506 | A1 | 27-01-2022 |
| | | | | US | 2022339771 | A1 | 27-10-2022 |
| | | | | US | 2023347490 | A1 | 02-11-2023 |
| | | | | US | 2024075605 | A1 | 07-03-2024 |
| | | | | US | 2024326218 | A1 | 03-10-2024 |
| US 7683570 | B2 | | 23-03-2010 | CN | 101836344 | A | 15-09-2010 |
| | | | | EP | 2171825 | A1 | 07-04-2010 |
| | | | | JP | 4931161 | B2 | 16-05-2012 |
| | | | | JP | 2010534054 | A | 28-10-2010 |
| | | | | US | 2009020346 | A1 | 22-01-2009 |
| | | | | WO | 2009012038 | A1 | 22-01-2009 |

EPO FORM P0459

For more details about this annex : see Official Journal of the European Patent Office, No. 12/82

44